# EUROPEAN PATENT SPECIFICATION

(11) **EP 1 950 076 B1**
(45) Date of publication and mention of the grant of the patent: **21.07.2010**
(21) Application number: 08100856.7
(22) Date of filing: 24.01.2008
(51) Int. Cl.: B60K 17/356, B60K 17/04, B60K 7/00

(54) **Vehicle drive device and hydraulic circuit thereof**
Fahrzeugantriebsvorrichtung und hydraulische Schaltung dafür
Dispositif de commande de véhicule et son circuit hydraulique

(30) Priority: 25.01.2007 JP 2007014935; 29.01.2007 JP 2007017525
(43) Date of publication of application: 30.07.2008
(73) Proprietor: Honda Motor Co., Ltd., Tokyo 107-8556 (JP)
(72) Inventor: Kira, Nobuhiro c/o Honda R&D Co., Ltd., Saitama 351-0193 (JP); Sonoda, Kouichi c/o Honda R&D Co., Ltd., Saitama 351-0193 (JP); Ohta, Koji c/o Honda R&D Co., Ltd., Saitama 351-0193 (JP); Kuroda, Kouji c/o Honda R&D Co., Ltd., Saitama 351-0193 (JP); Aoki, Takash c/o Honda R&D Co., Ltd., Saitama 351-0193 (JP); Yamamoto, Akihiro c/o Honda R&D Co., Ltd., Saitama 351-0193 (JP)
(74) Representative: Rupp, Christian

(56) References cited:
- EP-A- 0 224 144
- EP-A- 1 571 751
- DE-A1- 2 526 573
- GB-A- 2 386 653

## Description

### BACKGROUND OF THE INVENTION

### Field of the Invention

The present invention relates to a vehicle drive device that transmits the drive power of an electric motor to the left and right wheels of a vehicle via a differential device, and a hydraulic circuit thereof.

### Description of Related Art

A vehicle drive device has been proposed in which left and right axles of a vehicle are coupled to a differential device, with the drive power transmitted to the differential device by an electric motor that is arranged coaxially on the outer periphery of one axle (for example, refer to Japanese Unexamined Patent Application, First Publication No. 2006-264647).

In this drive device, an electric motor for driving the axle and a planetary gear type speed reducer for reducing the driving rotation speed of the electric motor are coaxially arranged on an outer peripheral side of one axle, and the electric motor, the planetary gear type speed reducer, and the differential device are housed in a housing. In this planetary gear type speed reducer, a sun gear is connected to a rotor of the electric motor that is arranged on the outer periphery of one axle, and the sun gear is engaged with a planetary gear, and a planetary carrier is connected to a differential case of the differential device. The planetary gear is further engaged with a ring gear, and the ring gear is suitably braked and controlled by a multi-plate type braking means.

With this constitution, when the ring gear is braked by the braking means, the power of the electric motor is reduced by a set speed reduction ratio and input to the differential device via the planetary carrier, and transmitted to the left and right wheels of the vehicle via the differential device. On the other hand, when the bracing of the ring gear by the braking means is released, the ring gear, which is engaged with the planetary gear, runs idle. As a result, power transmission between the planetary carrier and the sun gear is prevented, and so power transmission between the wheels and the electric motor is blocked.

Accordingly, in this drive device, it is possible to prevent excessive rotation of an electric motor and an increase in axle friction by releasing the braking of the ring gear by the braking means when the wheel-side rotation speed is faster than the electric motor-side rotation speed.

Also, in the abovementioned drive device, an electric motor for driving the axle, a planetary gear type speed reducer for reducing driving rotation of the electric motor, and a differential device that distributes the output of the speed reducer to the left and right wheels of the vehicle are housed in the housing as a unit. The sun gear of the planetary gear type speed reducer is connected to a rotor of the electric motor, with the sun gear being engaged with the planetary gear, and the planetary carrier is connected to the differential case of the differential device. The planetary gear is moreover engaged with the ring gear, and the ring gear is braked and controlled by a hydraulic clutch.

When the braking of the ring gear by the hydraulic clutch is released, the power transmission from the electric motor to the wheels is blocked. Thereby, it is possible to prevent excessive rotation of an electric motor and an increase in axle friction when the wheel-side rotation speed is faster than the electric motor-side rotation speed (during speed reduction).

In the hydraulic circuit that activates the hydraulic clutch, oil that is emitted from an oil pump is switched between a lubricating oil passage (low pressure oil passage) and a clutch side oil passage by a switching valve. An opening/closing valve for clutch operation and an accumulator are provided in the clutch side oil passage. Note that since the pressure of the accumulator is fed back to the controller, a pressure sensor is provided.

In the above-mentioned hydraulic circuit, during pressure accumulation to an accumulator, the switching vale is switched to the clutch side oil passage, and high pressure hydraulic oil is supplied from the oil pump to the hydraulic clutch and accumulator. When the accumulator has risen to the predetermined pressure, the switching value is switched to the lubricating oil passage, and low-pressure lubricating oil is supplied from the oil pump to the electric motor, the planetary gear type speed reducer, and the differential device. Note that in the housing, an oil reservoir is provided so as to straddle the lower portions of the electric motor, the planetary gear type speed reducer, and the differential device.

However, in the case of this conventional drive device, power transmission between the wheels and the electric motor is blocked by connecting the differential case of the differential device and the planetary carrier of the planetary gear type speed reducer and suitably releasing the braking on the ring gear with the braking means. For this reason, when performing vehicle travel with the electric motor disengaged from the wheels in a stopped state, the differential case, which is a heavy load, and the planetary gear, ring gear and the like are linked with the wheels and rotate. For that reason, in the conventional differential device described above, when driving with the wheels disengaged from the electric motor, it is not possible to sufficiently lower axle friction, and so further reduction of axle friction has been desired.

Also, in the case of the hydraulic circuit of the vehicle drive device according to the aforementioned conventional technology, after adjusting the pressure of the accumulator at a high pressure, lubricating oil is supplied at a low pressure, and so the problem arises of losses of the oil pump increasing.

Also, in the vehicle drive device according to the aforementioned conventional technology, when the braking of the ring gear is released, the ring gear of the planetary gear type speed reducer, the planetary gear and planetary carrier, and differential device run idle with the wheels. However, since oil is stored only in the bottom region of the housing, seizure and abnormal wear due to the idle running of the speed reducer and differential device are a concern. Note that when the oil that is stored in the housing is increased, the speed reducer and differential device are cooled and lubricated by that oil, and so it is possible to prevent seizure and abnormal wear. However, in this case, due to oil agitation and friction of the electric motor due to each gear, losses during power transmission increase.

GB Patent Publication No. 2386653 discloses a differential that has an input drive member in the form of a sleeve which can be connected via a clutch pack to a differential gear carrier, which carries two bevel gears which each drive an output shaft respectively. A further clutch pack is provided. A ball ramp mechanism actuates the engagement of each clutch pack in turn to allow both output shafts to be driven and have differential rotation, via engagement of the second clutch pack, and through further actuation, to lock the differential, via engagement of clutch.

The first object of the present invention is to provide a vehicle drive device with less drive power loss by being able to sufficiently decrease axle friction in the case of driving with the wheels disengaged from the electric motor side.

Moreover, the second object of the present invention is to provide a hydraulic circuit of a vehicle drive device that is capable of reducing the losses of the oil pump and also capable of combining prevention of seizure and a reduction in drive power loss.

### SUMMARY OF THE INVENTION

The present invention disclosed in the present application for solving the first object provides a vehicle drive device including: an electric motor that drives wheels of a vehicle; a speed reducer that reduces a driving rotation rate of the electric motor; a differential device that distributes an output of the speed reducer to a left wheel and a right wheel of the vehicle; and an engager that is provided between either one of the left wheel or the right wheel of the vehicle and the differential device, and performs an engagement and a disengagement of a drive power therebetween.

Thereby, when one wheel and the differential device are connected by the engager, the left and right wheels are connected to the electric motor via the differential device and the speed reducer. Accordingly, when the electric motor is driven in this state, the drive power of the electric motor is reduced by a set speed reduction ratio and distributed to the left and right axles via the differential device. Also, when the one wheel and the differential device are disconnected by the engager, the one wheel side of the differential device enters a nearly no-load state. Therefore, the other wheel that is connected to the differential device rotates without hardly transmitting drive power to the differential case. Accordingly, in this state, rotating force is no longer transmitted from the wheel side to the electric motor side via the differential device and the speed reducer.

Also, according to the above invention, an engager is provided that performs power engagement and disengagement between either one of the left or right wheels of the vehicle and the differential device, whereby the left and right wheels are rotated without hardly transmitting drive power to the differential case and speed reducer side by the disengagement operation with the engager. For this reason, in the case of driving with the wheels disengaged from the electric motor side, co-rotation of the differential case and the speed reducer is eliminated, and so it is possible to sufficiently reduce axle friction. Accordingly, in the case of driving with the wheels disengaged from the electric motor side, it is possible to reliably reduce drive power loss of the vehicle.

The vehicle drive device of the present application may further include a wheel axle that connects either one of the left wheel or the right wheel of the vehicle and the differential device, wherein the electric motor is disposed around the wheel axle.

Thereby, the electric motor is disposed in a compact manner around the axle.

Also, the present invention of the present application may further include a wheel axle that connects either one of the left wheel or the right wheel of the vehicle and the differential device, wherein: the speed reducer is a planetary gear type speed reducer that is disposed around the wheel axle; and the planetary gear type speed reducer has a ring gear that is connected to the inner side of a housing fixed on a vehicle body.

Thereby, the drive power of the electric motor is input to one of the sun gear of the planetary gear type speed reducer and the planetary carrier and output to the other. However, since the ring gear is coupled to the housing that is fixed to the vehicle body, the rotation speed of the drive power from the electric motor is sufficiently and greatly reduced to be reliably transmitted to the differential device. Also, the planetary gear type speed reducer is disposed in a compact manner around the axle.

Also, in the present invention of the present application, the planetary gear type speed reducer may have a sun gear, a first gear that is engaged with the sun gear, and a second gear that is integrally provided laterally to an axial direction of the first gear and has a smaller diameter than the first gear; and the ring gear may be engaged with a circumference side of the second gear.

In this case, since the ring gear is arranged on the outer circumference side of the small-diameter second gear of the planetary gear, it is possible to make the outer diameter smaller compared to when it is arranged on the outer circumference side of the first gear that is directly engaged with the sun gear. Accordingly, it is possible to reduce the outer diameter of the housing that houses the ring gear.

Also, the present invention of the present application may further include an oil pump that is disposed between the electric motor and the engager and, by being driven by the electric motor, supplies a hydraulic fluid to the engager, wherein the engager has a hydraulic engager that performs the engagement and the disengagement of the drive power by a hydraulic pressure.

Thereby, the oil pump that is driven by the electric motor is arranged close to the hydraulic engager, and the hydraulic engager is actuated by hydraulic fluid that is supplied from the oil pump. Accordingly, it is possible to rapidly perform drive power connection and disconnection between the wheels and the differential device.

Also, in the present invention of the present application, the engager may be a gear-type engager.

Thereby, once the gear-type engager is engaged to be in the drive power connected state, thereafter without continuously applying a large amount of energy, the engaged state will be maintained. Moreover, when compared to a friction engagement-type engager such as a multi-plate clutch, less rotational resistance occurs in the drive power disconnected state.

Also, in the present invention of the present application, the gear-type engager may switch between the engagement and the disengagement by applying a hydraulic pressure to a piston that is arranged coaxially with a wheel axle.

Thereby, a substantially uniform force in the circumferential direction is applied to the gear-type engager from the piston, so that a stable drive power engagement-disengagement operation is performed.

Also, the present invention of the present application may further include a state detection switch that detects the engagement-disengagement state of the gear-type engager by abutting the piston during a set displacement of the piston, wherein the state detection switch is installed obliquely inclined to a peripheral wall of a housing fixed on a vehicle body.

Thereby, since the state detection switch no longer greatly occupies the housing in the axial direction, it is possible to shorten the axial length of the housing.

Also, in the present invention of the present application, the engager may enter an engaged state when the electric motor is in an operating state, and enter a disengaged state when the electric motor is in a non-operating state.

Thereby, only during driving of the wheels and regenerative power generation by the electric motor the left and right wheels are mutually connected via the differential device, leading to a state of power transmission between the electric motor and the left and right wheels being possible. In other conditions of not operating the electric motor, the connection of the left and right wheels via the differential device is cut off, leading to a state of power transmission between the left and right wheels and the electric motor being impossible. Accordingly, it is possible to effectively reduce energy loss during vehicle travel.

In order to solve the second object above, the present invention of the present application may further include an oil pump that is driven by the electric motor; an actuating oil passage that supplies a volume of oil from the oil pump to the engager; a lubricating oil passage that supplies the volume of oil from the oil pump to the differential device; a first switching valve that switches a supply passage of the volume of oil from the oil pump to the actuating oil passage or the lubricating oil passage; a first solenoid valve that controls the operation of the first switching valve; and a control portion that controls the operation of the first solenoid valve.

Thereby, in the case of adopting an oil pump that is driven by the electric motor, lubrication of the differential device is stably performed by supplying oil to the lubricating oil passage in the normal state, and during engagement-disengagement switching of the engager, it is possible to perform engagement-disengagement switching at a high pressure by supplying the oil to the actuating oil passage. Accordingly, since the hydraulic pressure is adjusted to high pressure only when performing engaging-and-disengaging switching and adjusted to a low pressure otherwise, by limiting the frequency of controlling the oil pump at a high pressure, it is possible to decrease wearing out of the oil pump.

Also, the present invention of the present application may further include a second switching valve that switches the supply passage of the volume of oil from the oil pump in accordance with the engagement-disengagement state of the engager; and a second solenoid valve that controls the operation of the second switching valve, wherein the control portion controls the operation of the first solenoid valve and the second solenoid valve.

Thereby, it is possible to switch engagement-disengagement of the engager without detecting or adjusting the oil pressure of the actuating oil passage. Accordingly, it is possible to reduce wearing out of the oil pump.

According to this invention, even in the case of adopting an oil pump that is driven by the electric motor, lubrication of the differential device is stably performed by supplying oil to the lubricating oil passage in a normal state, and only during engagement-disengagement switching of the engager, it is possible to perform engagement-disengagement switching by supplying the oil to the actuating oil passage. Accordingly, since the hydraulic pressure is adjusted to high pressure only when performing engaging-and-disengaging switching and adjusted to a low pressure otherwise, by limiting the frequency of controlling the oil pump at a high pressure, it is possible to decrease losses.

Also, in the present invention of the present application, the control portion may activate both the first solenoid valve and the second solenoid valve when switching the engager from the disengaged state to the engaged state; and the control portion activates only the first solenoid valve when switching the engager from the engaged state to the disengaged state.

Thereby, it is possible to readily perform engagement-disengagement switching of the engager.

Also, in the present invention according to the present application, the control portion, after switching the engager from the disengaged state to the engaged state, may first stop the first solenoid valve and next stop the second solenoid valve.

Stopping the second solenoid valve first leads to a state in which only the first solenoid valve is operating, and so the engager ends up reverting to the disengaged state. However, it is possible to maintain the engaged state of the engager according to the present invention.

Also, the present invention of the present application may further include a housing that houses the electric motor, the speed reducer and the differential device and to which the volume of oil is recovered; and an oil reservoir that is partitioned from the housing and that temporarily stores the volume of oil during forward driving of the electric motor.

Thereby, during forward driving of the electric motor, oil is temporarily stored in the oil reservoir, and so it is possible to reduce the quantity of residual oil in the housing. Accompanying this, it is possible to suppress the agitating action of the residual oil by the speed reducer, and possible to reduce the friction of the electric motor due to the residual oil. Accordingly, it is possible to reduce drive power loss. On the other hand, during stoppage and during reverse driving of the electric motor, since oil flows out of the oil reservoir to the housing, it is possible to increase the amount of residual oil of the housing. Accompanying this, it is possible to sufficiently cool and lubricate the differential device that spins idly in the housing by disengagement of the engager. Accordingly, it is possible to prevent seizure and abnormal wear of the differential device. From the above, it is possible to achieve both a reduction of drive power loss and prevention of seizure.

Also, in the present invention of the present application, the lubricating oil passage may supply the volume of oil to the speed reducer in addition to the differential device for lubrication, and supply the volume of oil to the oil reservoir for temporary storage.

Thereby, after supplying the required oil for lubrication of the differential device and the speed reducer, it is possible to supply the remaining oil to the oil reservoir. Accordingly, it is possible to ensure lubrication of the differential device and the speed reducer.

Also, in the present invention of the present application, the oil reservoir may supply the volume of oil to the housing in the case of the stored quantity of the volume of oil in the oil reservoir being equal to or greater than a predetermined quantity.

Thereby, it is possible to adjust the residual amount of oil in the housing during forward driving of the electric motor.

### BRIEF DESCRIPTION OF THE DRAWINGS

FIG. 1 is an outline diagram showing the layout of a vehicle to which the drive device of one embodiment of the present invention is applied.
FIG. 2 is a longitudinal sectional view showing the drive device of the same embodiment.
FIG. 3 is an enlarged sectional view of a portion of FIG. 2 showing the same embodiment.
FIG. 4 is a hydraulic circuit view showing the same embodiment.
FIG. 5 is a correspondence table showing with symbols the operating state of the SYN solenoid and the H/L solenoid of the same embodiment.
FIG. 6 is an outline diagram showing the layout of a vehicle to which the drive device of another embodiment of the present invention is applied.
FIG. 7 is a longitudinal sectional view showing the drive device of the same embodiment.
FIG. 8 is an enlarged sectional view of a portion of FIG. 7 showing the same embodiment.
FIG. 9 is a hydraulic circuit view showing the same embodiment.
FIG. 10 is an explanatory drawing of the oil distribution method.
FIG. 11 is a graph that shows the correlation between vehicle speed, tank supply rate, and storage time.
FIG. 12 is a correspondence table showing with symbols the operating state of the SYN solenoid and the H/L solenoid of the same embodiment.
FIG. 13 is a drawing explaining the operation of the hydraulic circuit in the cooling-lubricating mode.
FIG. 14 is a drawing explaining the operation of the hydraulic circuit in the synchronization OFF switching mode.
FIG. 15 is a drawing explaining the operation of the hydraulic circuit in the synchronization ON switching mode.
FIG. 16 is a first timing chart of the hydraulic circuit of the vehicle drive device.
FIG. 17 is a second timing chart of the hydraulic circuit of the vehicle drive device.

### DETAILED DESCRIPTION OF THE INVENTION

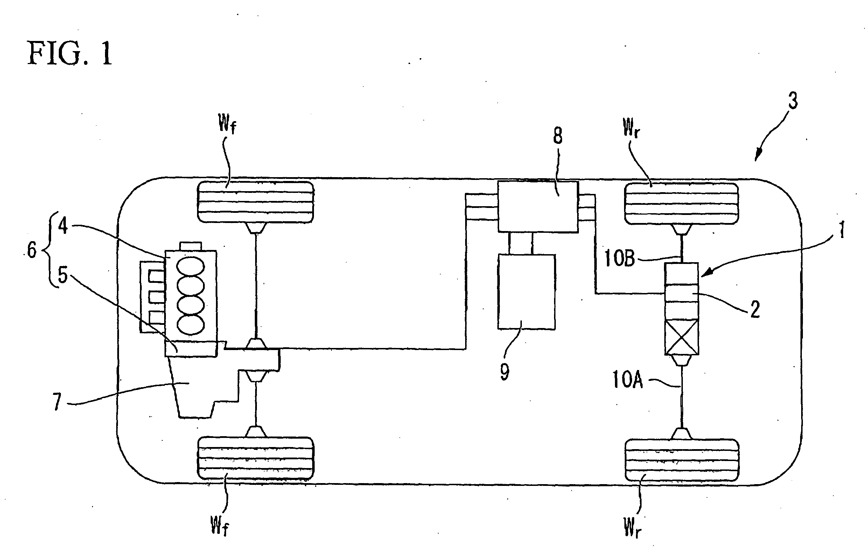

Hereinbelow, an embodiment of the present invention shall be described with reference to FIG. 1 to FIG. 5.

A drive device 1 according to the present embodiment employs an electric motor 2 as a driving source for driving wheels of a vehicle, and is used in a vehicle 3 of a drive system such as that shown in FIG. 1.

The vehicle 3 shown in FIG. 1 is a hybrid vehicle that has a driving unit 6 in which an internal combustion engine 4 and an electric motor 5 are connected in series, and the power of this driving unit 6 is transmitted to a front wheel Wf side via a transmission 7, On the other hand, the power of a drive device 1 according to this invention that is provided separately from the driving unit 6 is transmitted to a rear wheel Wr side. The electric motor 5 of the driving unit 6 and an electric motor 2 of the rear wheel Wr side drive device 1 are connected to a battery 9 via a PDU 8 (power drive unit). The power supply from the battery 9 and the energy recovery from the electric motors 5, 2 to the battery 9 are performed via the PDU 8.

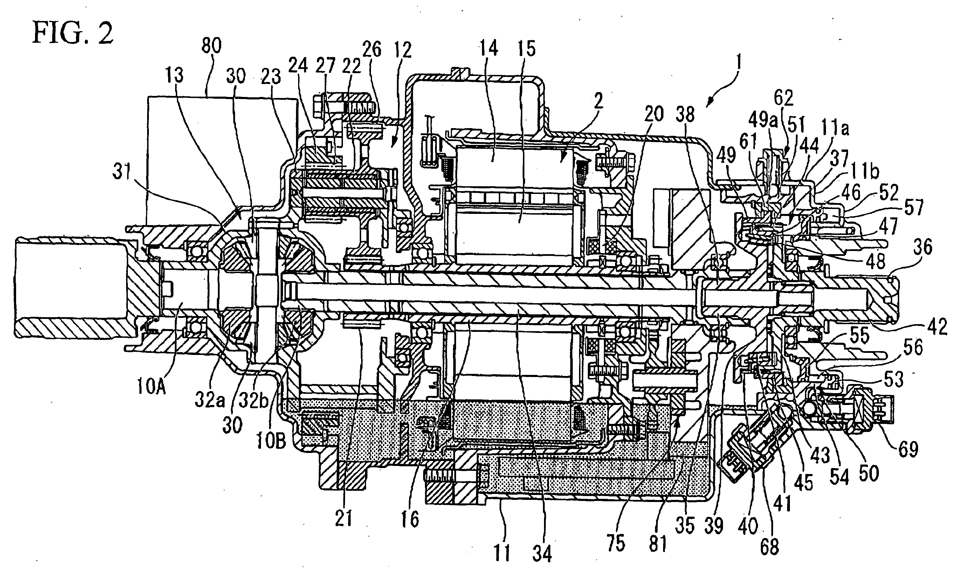

FIG. 2 shows a longitudinal sectional view of the entire drive device 1. In the drawing, 10A, 10B are left and right axles at the rear wheel side of the vehicle. A. housing 11 of the drive device 1 is provided so as to cover the outer circumferential side of the one axle 10B from approximately the middle position of both axles 10A, 10B, and is supported and fixed with the axle 10B at the bottom of the rear portion of the vehicle 3 (refer to FIG. 1), Also, the housing 11 is overall formed in an approximately cylindrical shape, with the electric motor 2 for driving the axle, a planetary gear type speed reducer 12 (speed reducer) for reducing the driving rotation speed of the electric motor 2, and a differential device 13 that distributes the output of the planetary gear type speed reducer 12 to the left and right axles 10A, 10B housed therein so as to be coaxial with the axle 10B.

A stator 14 of the electric motor 2 is fixed and installed at approximately the center position in the axial direction of the housing 11, and an annular rotor 15 is arranged in a rotatable manner on the inner circumferential side of this stator 14. A cylindrical shaft 16 that surrounds the outer circumferential side of the axle 10B is joined to the inner circumferential portion of the rotor 15, and this cylindrical shaft 16 is supported in a rotatable manner in the housing I 1 so as to be coaxial with the axle 10B. Also, a resolver 20 for feeding back rotation position information of the rotor 15 to a controller (not illustrated) of the electric motor 2 is provided between the outer circumference of the cylindrical shaft 16 and the housing 11.

The planetary gear type speed reducer 12 is provided with a sun gear 21 that is integrally provided on the outer circumference of one end side of the cylindrical shaft 16, a plurality of planetary gears 22 that are engaged with this sun gear 21, a planetary carrier 23 that supports these planetary gears 22, and a ring gear 24 that is engaged with the outer circumferential side of the planetary gears 22. The driving force of the electric motor 2 is input from the sun gear 21, and the reduced driving force is output via the planetary carrier 23.

The planetary gears 22 have a first gear 26 with a large diameter that is directly engaged with the sun gear 21, and a second gear 27 of a smaller diameter than the first gear 26, with the first gear 26 and the second gear 27 being integrally formed in a state of being coaxial and offset in the axial direction. The ring gear 24 is fixed and installed at a position facing laterally to the axial direction, with the first gear 26 in the housing 11, and the inner circumferential surface thereof is engaged with the small diameter second gear 27. In the case of this embodiment, the maximum radius of the ring gear 24 is set so as to be smaller than the maximum distance from the center of the axle 10B of the first gear 26.

The differential device 13 is provided with a differential case 31 in which a rotatable pinion 30 is provided in a protruding manner on the inner circumferential side, and a pair of side gears 32a, 32b that are engaged with the pinion 30 in this differential case 31. These side gears 32a, 32b are joined to the left and right axles 10A, 10B respectively. The planetary carrier 23 of the planetary gear type speed reducer 12 is integrally joined to the differential case 31. Note that the differential case 31 is rotatably supported in the housing 11.

The axle 10B is provided with a first axle 34 in which the side gear 32b of the differential device 13 is provided at one end, a connecting hub 35 that is connected in an integrally rotatable manner to the other end of this first axle 34, and a second axle 36 that is provided in a rotatable manner at the other end in the axial direction of the differential device 13 in the housing 11. The second axle 36 is connected to the right-side wheel (not illustrated), and the connecting hub 35 and the second axle 36 can be changed as desired to an engaged state or disengaged state via a synchromesh mechanism 37 that is an engager.

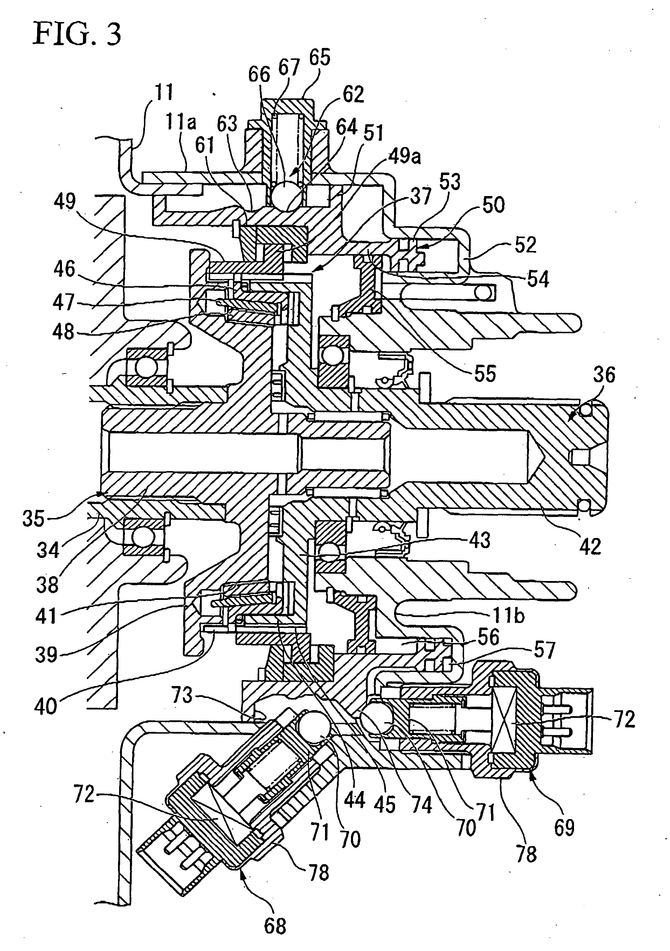

The connecting hub 35 is, as shown in FIG. 3, provided with an axle portion 38 that is spline-fitted with the first axle 34 and a flange portion 39 that is integrally formed at the end portion of the axle portion 38. On the outer circumference of the flange portion 39 are provided a spline gear 40 and a tapered surface 41 that is one step smaller in the diameter direction than the spline gear 40 and slopes in a tapered shape.

The second axle 36 on the wheel side is provided with an axle portion 42 to which a connecting rod not illustrated on the right wheel side is spline fitted to one end and a flange portion 43 that is integrally formed at the end portion of the connecting hub 35 side of this axle portion 42. A cylindrical wall 44 that protrudes in the direction of the connecting hub 35 is provided on the outer circumference of the flange portion 43. In addition, a spline gear 45 of the same diameter as the spline gear 40 of the connecting hub 35 is formed on the outer circumferential surface of this cylindrical wall 44.

The synchromesh mechanism 37 is a so-called triple-cone synchromesh mechanism, and is provided with an outer ring 46, a synchrocone 47, and an inner ring 48 that are friction transmission members of three layers interposed between the tapered surface 41 of the connecting hub 35 and the cylindrical wall 44 of the second axle 36, a synchro sleeve 49 that is spline fitted in a slidable manner in the axial direction on the outer circumference of the spline gear 45 of the second axle 36, and a control piston 50 (piston) that makes this synchro sleeve 49 advance and retreat in the axial direction. In the synchromesh mechanism 37, the outer ring 46, the synchrocone 47, the inner ring 48 and the spline gear 45 make friction contact via their tapered surfaces when the synchro sleeve 49 is operated in the direction of the connecting hub 35 by the control piston 50. When there is a rotation speed differential between the connecting hub 35 and the second axle 36, that rotation speed differential diminishes by the friction resistance between the tapered surfaces. When the rotation speed differential of the connecting hub 35 and the second axle 36 becomes sufficiently low, and moreover the synchro sleeve 49 is operated in the direction of the connecting hub 35, an inner spline (reference number omitted) that is formed on the inner circumferential surface thereof is engaged across the spline gears 45, 40 of the second axle 36 and the connecting hub 45, and thus joins the first axle 34 and the second axle 36. Also, when the synchro sleeve 49 is operated by the control piston 50 in the direction of separating from the connecting hub 35 from the state of the first axle 34 and the second axle 36 being coupled, the engagement with the spline gear 40 of the connecting hub 35 is released, and thereby the connection of the first axle 34 and the second axle 36 is disengaged.

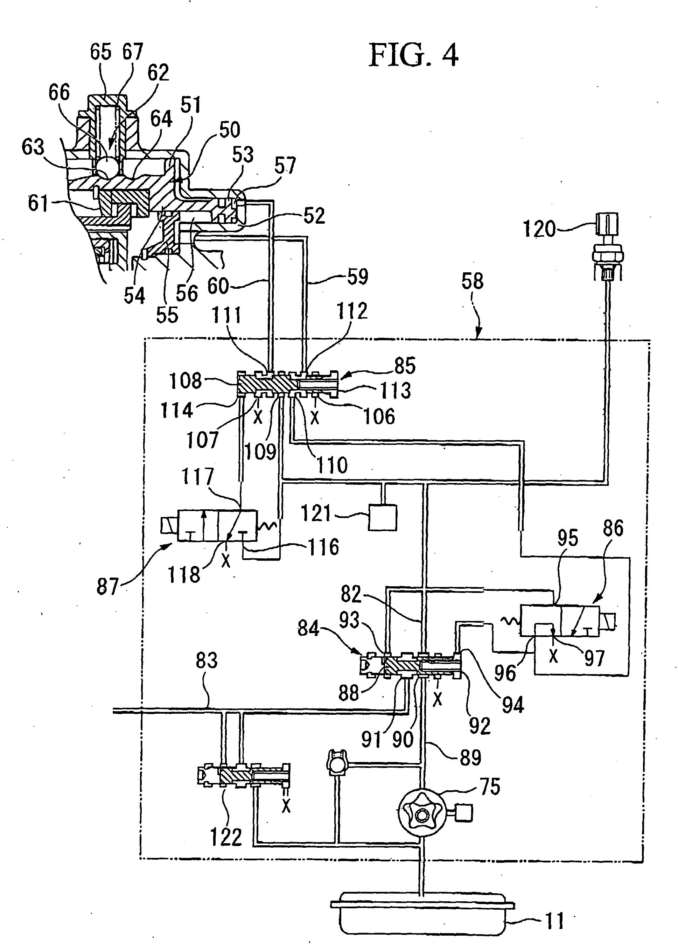

The control piston 50 is provided with a guide wall 51 of an approximately cylindrical shape that is fitted in a freely slidable manner to a peripheral wall 11a and the end portion of the housing 11, an annular piston body 53 that is fitted in a freely slidable manner in a cylinder portion 52 that is recessed in an annular shape in an end portion wall 1 1b of the housing 11, and a cylindrical coupling wall 54 that couples the guide wall 51 and the piston body 53. Also, an annular seal wall 55 that abuts in a freely slidable manner the inner circumference wall of the coupling wall 54 of the control piston 50 is fixed to the end portion wall 11b of the housing 11. The piston body 53 forms a release side operating chamber 56 between the cylinder portion 52 and the seal wall 55 and the coupling wall 54, and forms a connecting side operating chamber 57 with the bottom portion of the cylinder portion 52. The release side operating chamber 56 and the connecting side operating chamber 57 are respectively connected to supply/exhaust passages 59, 60 (refer to FIG. 4) of a hydraulic circuit 58 described below. Note that in FIG. 2 and FIG. 3, which are divided along the center axis line of the housing 11, the upper side shows the state of the synchromesh mechanism 37 in the connected state while the lower side shows the synchromesh mechanism 37 in the disconnected state.

Also, an annular retention ring 61 is attached on the inner circumference of the guide wall 51 of the control piston 50, and a locking claw 49a that is provided protruding to the outer circumference of the synchro sleeve 49 is engaged by this retention ring 61. Accordingly, the synchro sleeve 49 is engaged by the control piston 50 via the retention ring 61, and thus operated to advance/retreat in accordance with the operation of the control piston 50.

A detent mechanism 62 for positioning the control piston 50 at the before and after set control positions (the control position on the connection side and the control position on the release side) is provided between the peripheral wall 11a of the housing 11 and the guide wall 51 of the control piston 50. This detent mechanism 62 is constituted by location notches 63, 64 of the connection side and release side that are provided along the axial direction on the peripheral surface of the guide wall 51, a ball retainer 65 that is provided passing through the peripheral wall 11a of the housing 11, a ball 66 that is held to be able to freely advance and retreat in the ball retainer 65, and a spring 67 that biases this ball 66 in the axial direction of the control piston 50. When the control piston 50 is hydraulically controlled to either the front or the rear, as a result of the ball 66 being fitted in the location notch 63 or 64 in the operation direction thereof by being spring biased, the detent mechanism 62 positions the control piston 50 at either of the front or rear set control positions in the axial direction.

Also, a pair of state detection switches 68, 69 which detect the engaging-and-disengaging state of the synchromesh mechanism 37 from the control position of the control piston 50 are provided at the peripheral wall 11a and the end portion wall 11b of the housing 11. In these state detection switches 68, 69, a detection piston 71 that retains a ball 70 at the distal end portion as shown in FIG. 3 is housed in a casing 78, a switch body portion 72 is put in the ON state when the detection piston 71 is pushed in by a preset amount by an external force that acts on the ball 70, and an ON signal is output to a controller (not shown) from this switch body portion 72. The one state detection switch 68 is installed obliquely inclined to the peripheral wall 11 a of the housing 11, and the distal end portion projects outward in the housing 11 through the peripheral wall 11a, and the other state detection switch 69 is installed along the axial direction in the end portion wall 1 1b of the housing 11, with the distal end portion thereof projecting in the housing 11 through the end portion wall 11b. A cavity portion 73 for avoiding interference with the distal end portion of the one state detection switch 68 is provided in the outer periphery of the guide wall 51 of the control piston 50, and a tapered switch operating piece 74 which each ball 70 of the state detection switches 68, 69 selectively abut in accordance with the actuated position of the control piston 50 is provided at the peripheral edge portion on the end portion wall I 1b side of the guide wall 51. Note that in the case of this embodiment, the state detection switch 68 that is installed in the peripheral wall 11a detects the connected state (ON state) of the synchromesh mechanism 37, and the state detection switch 69 that is installed in the end portion wall 11b detects the disconnected state (OFF state) of the synchromesh mechanism 37.

Also, as shown in FIG. 2, an oil pump 75 for supplying hydraulic fluid that is pumped up from the bottom portion of the housing 11 to the cooling passages and lubricating passages in the control piston 50 and the housing 11 and return passage to the reserve tank 80 is fixed and installed between the electric motor 2 and the synchromesh mechanism 37 in the housing 11. This oil pump 75 is a pump that operates by receiving driving power of the electric motor 2, and is constituted, for example, by a trochoid-type pump.

Note that reference numeral 81 in FIG. 2 denotes an oil strainer that is provided in the intake portion of the oil pump 75.

Here, the hydraulic circuit 58 shown in FIG. 4 shall be described.

The hydraulic circuit 58 is provided with an oil pump 75 that pumps up and emits the hydraulic fluid at the bottom portion of the housing 11, a regulator valve 84 that distributes the hydraulic fluid discharged from the oil pump 75 to a high-pressure line passage 82 and a low-pressure passage 83, and a supply/exhaust switching valve 85 that selectively connects the line passage 82 to the supply/exhaust passages 59, 60 for controlling the control piston 50 of the synchromesh mechanism 37, with the regulator valve 84 and the supply/exhaust switching valve 85 being respectively operated by solenoid-operated control valves 86, 87. Note that hereinbelow, the control valve 86 that operates the regulator valve 84 is, for explanation purposes, called the H/L solenoid 86, and the control valve 87 that operates the supply/exhaust switching valve 85 is called the SYN solenoid 87.

The regulator valve 84 is provided with a control spool 88 which is accommodated in a freely slidable manner in valve accommodating chamber (numeral abbreviated), an annular supply port 90 that is formed in the inner circumference surface of approximately the center portion of the valve accommodating chamber to always make a pump side passage 89 and the line passage 82 communicate, an annular exhaust port 91 that is formed in a position adjacent to the supply port 90 of the valve accommodating chamber to communicate with the low-pressure passage 83, a spring 92 that, by being arranged at one end side of the valve accommodating chamber (right side in drawing), biases the control spool 88 to the other end side (left side in drawing), a line pressure introduction port 93 that, by being provided at the other end of the valve accommodating chamber, applies pressure of the line passage 82 in the direction that resists force of the spring 92 on the control spool 88, and a spool control port 94 that, by being provided at one end side of the valve accommodating chamber in which the spring 92 is accommodated, control pressure by the H/L solenoid 86 described later is introduced.

In this regulator valve 84, when the spool control port 94 is controlled to low pressure (drain pressure) by the H/L solenoid 86, the line pressure that acts on the control spool 88 through the line pressure introduction port 93 overcomes the biasing force of the spring 92, and by moving the control spool 88 to the right side in FIG. 4, causes the supply port 90 to connect with the annular exhaust port 91. For this reason, the hydraulic fluid that is discharged from the oil pump 75 at this time is supplied to the side of the low-pressure passage 83 via the regulator valve 84. On the other hand, when the spool control port 94 is controlled to a high pressure (line pressure) by the H/L solenoid 86 from this state, the forces that act on the control spool 88 through the line pressure introduction port 93 and the spool control port 94 balance, and the control spool 88 moves to the left side in FIG. 4 by the force of the spring 92. For this reason, almost the entire quality of the hydraulic fluid that is discharged from the oil pump 75 at this time is supplied to the line passage 82 via the regulator valve 84.

The H/L solenoid 86 is a two-position, three-port switching valve that is operated by the ON/OFF of a solenoid, and is provided with a line side port 95 that is connected to the line passage 82, a control port 96 that communicates with the spool control port 94 of the regulator valve 84 and a second supply/exhaust port 110 of the supply/exhaust switching valve 85 described later, and a drain port 97 that is connected to a drain passage. The H/L solenoid 86 is turned ON/OFF by a controller not shown. When turned OFF, it connects the control port 96 to the drain port 97, and when turned ON, connects the line side port 95 to the control port 96. That is, when the H/L solenoid 86 is OFF, the spool control port 94 of the regulator valve 84 is put in the low-pressure state, whereby the same valve 84 connects the pump side passage 89 and the low pressure passage 83. When the H/L solenoid 86 is ON, the spool control port 94 of the regulator valve 84 is put in the high pressure state, whereby the same valve 84 connects the pump side passage 89 and the line passage 82.

Also, the supply/exhaust switching valve 85 is provided with a control spool 108 that is accommodated in a freely slidable manner in a valve accommodating chamber (numeral abbreviated), annular first and second supply/exhaust ports 109, 110 that are provided parallel in the axial direction in approximately the center portion of the valve accommodating chamber and are respectively connected to the line passage 82 and the valve control port 96 of the H/L solenoid 86, an annular connection side port 111 that is provided at a position adjacent to the first supply/exhaust port 109 of the valve accommodating chamber and connected to the connecting side operating chamber 57 of the control piston 50, a first drain port 107 that is provided at a position adjacent to the connection side port 111 of the valve accommodating chamber, an annular release side port 112 that is provided at a position adjacent to the second supply/exhaust port 110 of the valve accommodating chamber and connected to the release side operating chamber 56 of the control piston 50, a second drain port 106 that is provided at a position adjacent to the release side port 112 of the valve accommodating chamber, a spring 113 that, by being disposed at one end side (right side in the drawing) of the valve accommodating chamber, biases the control spool 108 to the other end side (left side in the drawing), and a spool control port 114 to which, by being provided at the other end of the valve accommodating chamber, control pressure by the SYN solenoid 87 is introduced.

In this supply/exhaust switching valve 85, when the spool control port 114 is controlled to low pressure (drain pressure) by the SYN solenoid 87, the control spool 108 is moved to the left side in FIG. 4 by the biasing force of the spring 113, whereby the second supply/exhaust port 110 is connected to the release side port 112, and the connection side port 111 is connected to the first drain port 107.

When the H/L solenoid 86 is controlled to be OFF, the release side port 112 (release side operating chamber 56) and the connection side port 111 (connecting side operating chamber 57) both become the drain pressure, whereby the control piston 50 is put in a non-operating state. When the H/L solenoid 86 is controlled to be ON, the release side port 112 (release side operating chamber 56) becomes the line pressure, while the connection side port 111 (connecting side operating chamber 57) becomes the drain pressure, and as a result, the control piston 50 operates in the synchronization release direction.

On the other hand, when the spool control port 114 is controlled to a high pressure (line pressure) by the SYN solenoid 87 from this state, the control spool 108 overcomes the biasing force of the spring 113 and moves to the right side in FIG. 4 and makes the first supply/exhaust port 109 communicate with the connection side port 111 and also makes the release side port 112 communicate with the second drain port 106. Thereby, the connection side port 111 (connecting side operating chamber 57) becomes the line pressure, while the release side port 112 (release side operating chamber 56) becomes the drain pressure, and as a result, the control piston 50 operates in the synchro connection direction.

The SYN solenoid 87 is a two-position, three-port switching valve that is operated by the ON/OFF of a solenoid, and is provided with a line side port 116 that is connected to the line passage 82, a control port 117 that is connected to the spool control port 114 of the supply/exhaust switching valve 85, and a drain port 118 that is connected to a drain passage. This SYN solenoid 87 is turned ON/OFF by a controller not shown similarly to the H/L solenoid 86, and when turned OFF, connects the control port 117 to the drain port 118, and when turned ON, connects the line side port 116 to the control port 117. That is, when the SYN solenoid 87 is turned OFF, the spool control port 114 of the supply/exhaust switching valve 85 is put in a low-pressure state, whereby the same valve 85 connects the second supply/exhaust port 110 to the release side port 112 and connects the connection side port 111 to the first drain port 107. When the SYN solenoid 87 is turned ON, the spool control port 114 of the supply/exhaust switching valve 85 is put in a high-pressure state, whereby the same valve 85 connects the first supply/exhaust port 109 to the connection side port 111 and connects the release side port 112 to the second drain port 106.

Note that in FIG. 4, reference numeral 120 denotes a pressure sensor that detects the pressure of the line passage 82 and outputs the signal to a controller, and 121 denotes a relief valve that is provided in the line passage 82 Also, 122 is a return valve that adjusts the hydraulic pressure of the low pressure passage 83 and, when a large flow rate has flowed from the regulator valve 84 to the low pressure passage 83, returns the hydraulic fluid from a position directly under the regulator valve 84 to the oil pump 75.

Hereinbelow, the operation of each portion shall be described using as an example the case of starting the vehicle by the electric motor 2 of the drive device 1, and when the speed of the vehicle has reached a set speed, shifting to cruise control by the internal combustion engine 4 and moreover performing sudden acceleration by parallel driving of the internal combustion engine 4 and the electric motor 2. Note that the synchromesh mechanism 37 is one that is put in the ON state (connected state) when the vehicle is stopped.

When the electric motor 2 is started during starting of the vehicle, the drive power of the electric motor 2 is reduced by a speed reduction ratio by the planetary gear type speed reducer 12 and moreover transmitted to the left and right axles 10A, 10B via the differential device 13. At this time, since the synchromesh mechanism 37 is put in the connected state, the drive power that is distributed by the differential device 13 is transmitted to the wheels via the left and right axles 10A, 10B.

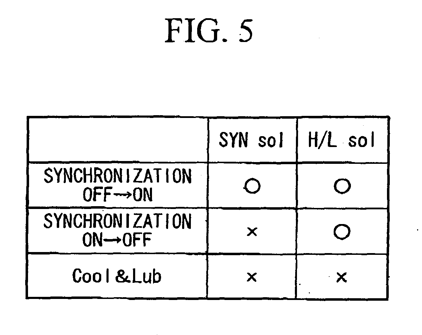

Note that directly after setting off, the H/L solenoid 86 and the SYN solenoid 87 are put in the OFF state (refer to the lower line in FIG. 5). Accordingly, when the rotation rate of the oil pump 7 rises with the starting of the electric motor 2, causing the pressure of the line passage 82 shown in FIG. 4 to rise, the pressure of the line pressure introduction port 93 of the regulator valve 84 increases, and the control spool 8 8 of the regulator valve 84 moves to the right side in the drawing. Thereby, the supply port 90 and the exhaust port 91 are connected, and the hydraulic fluid that is discharged from the oil pump 75 is supplied to the low-pressure passage 83.

When the vehicle speed reaches a set speed by the drive power of the electric motor 2 being transmitted to the wheels, and it is determined to have reached a cruise driving condition by a controller, the controller turns ON the H/L solenoid 86 and the line side port 95 of the same solenoid 86 is connected to the valve control port 96. In this way, when the high pressure line pressure is introduced to the valve control port 96, the regulator valve 84 moves to the left side in FIG. 4, and almost the entire flow volume of the hydraulic fluid that is discharged from the oil pump 75 is supplied to the line passage 82, while the hydraulic fluid of the line passage 82 is supplied to the second supply/exhaust port 110 of the supply/exhaust switching valve 85 via the valve control port 96. At this time, since the SYN solenoid 87 is in the OFF state (refer to the middle line in FIG. 5), the supply/exhaust switching valve 85 connects the second supply/exhaust port 110 to the release side port 112, and connects the connection side port 11 1 to the first drain port 107. Accordingly, while the high-pressure hydraulic fluid is supplied to the release side operating chamber 56 at this time, the hydraulic fluid is discharged from the connecting side operating chamber 57, and as a result, the control piston 50 operates in the synchronization release direction to put the synchromesh mechanism 37 in the release state. Note that the control piston 50 at this time is reliably maintained in the synchronization release position by the detent mechanism 62.

In this way, the connection by the synchromesh mechanism 37 is released, and when this is detected by the state detection switch 69, the controller stops operation of the electric motor 2 and starts the internal combustion engine 4, and subsequently turns OFF the H/L solenoid 86 again. At this time, although the hydraulic fluid of the release side operating chamber 56 and the connecting side operating chamber 57 is drained, once the engagement of the synchromesh mechanism 37 is released, since that state is maintained, there is no need to continue the application of high pressure in the release side operating chamber 56.

Once the synchromesh mechanism 37 is released in the above manner, since the connection of the differential device 13 and the right side wheel is disengaged, the right side wheel rotates in a free state, and the right-side side gear 32b of the differential device 13 enters a nearly no-load state. For this reason, the rotating force of the left-side wheel, without being transmitted for the most part from the left-side side gear 32a to the differential case 31, causes rotation of only the right-side side gear 32b (the first axle 34 of the right side axle 10B). Accordingly, the rotation of the left and right wheels at this time is blocked by the differential case 31 portion of the differential device 13 and so is not transmitted to the planetary gear type speed reducer 12 and the electric motor 2. As a result, there is of course no rotation as a result of the electric motor 2 being dragged by the rotation of the wheels, and follow rotation of the differential case 31 and the planetary gear type speed reducer 12 also does not occur.

Also, when moving from the abovementioned cruise driving condition to a sudden acceleration condition, and this is determined by the controller, the controller restarts the electric motor 2 and controls the rotation rate of the electric motor 2 so as to match the current vehicle speed, turns ON the H/L solenoid 86, connects the line side port 95 of the same solenoid 86 to the valve control port 96 side, and switches the supply of hydraulic fluid from the oil pump 75 to only the line passage 82 side by the regulator valve 84. After this, the controller turns ON the SYN solenoid 87 (refer to the upper line in FIG. 5), connects the line side port 116 of the same solenoid 87 to the control port 117, and moves the supply/exhaust switching valve 85 to the right side in FIG. 4. Thereby, the supply/exhaust switching valve 85 connects the first supply/exhaust port 109 to the connection side port 111 and connects the release side port 112 to the second drain port 106. Accordingly, while the high-pressure hydraulic fluid is supplied from the line passage 82 to the connecting side operating chamber 57 at this time, the hydraulic fluid is discharged from the release side operating chamber 56. As a result, the control piston 50 operates in the synchronization release direction to put the synchromesh mechanism 37 in the connected state. Note that the control piston 50 at this time as well is reliably maintained in the synchro connection position by the detent mechanism 62.

In this way, the synchromesh mechanism 37 is connected, and when this is detected by the state detection switch 68, the controller turns OFF the H/L solenoid 86, and thereafter continues to turn OFF the SYN solenoid 87. In this way, when the H/L solenoid 86 and the SYN solenoid 87 are turned OFF, although the hydraulic fluid of the connecting side operating chamber 57 and the release side operating chamber 56 is drained, once the synchromesh mechanism 37 is put in an engaged state, since that state is maintained, there is no need to continue the application of high pressure in the connecting side operating chamber 57. The hydraulic fluid that is discharged from the oil pump 75 at this time is again supplied to the low-pressure passage 83.

Also, when the synchromesh mechanism 37 is connected in this manner, the drive power of the electric motor 2 is transmitted to the left and right wheels via the planetary gear type speed reducer 12 and the differential device 13, and acceleration is performed combining the drive power of the electric motor 2 and the internal combustion engine 4.

In the vehicle that adopts this drive device 1, it is possible to suitably perform connection and disconnection of the synchromesh mechanism 37 by similar ON/OFF control of the H/L solenoid 86 and the SYN solenoid 87 even in conditions other than the traveling condition described above, and for example it is possible to perform regenerative power generation by the electric motor 2 by turning both solenoids 86, 87 ON during deceleration of the vehicle.

As above, in this drive device 1, the synchromesh mechanism 37 is provided in the one axle 10B that connects the right-side wheel and the differential device 13, and by disconnecting the connection of the right-side wheel and the differential device 13 by this synchromesh mechanism 37, it is possible to prevent the rotation of the left and right wheels from being transmitted to the differential case 31. For this reason, in the case of driving by disengaging the wheels from the electric motor 2, it is possible to prevent co-rotation of the differential case 31 and the planetary gear type speed reducer 12, which are heavy loads, in addition to the electric motor 2. Accordingly, by adopting this drive device 1, it is possible to substantially reduce axle friction in the case of driving with the wheels disengaged from the electric motor 2 side, and so possible reliably reduce drive power loss of the vehicle.

Also, in this drive device 1, since the electric motor 2 is coaxially disposed around the one axle 10B, it is possible to reduce the overall outer diameter of the device. Accordingly, since it is possible to reduce the occupying area of the drive device 1 in the vehicle, it is possible to optimize the vehicle layout.

Moreover, in this drive device 1, as a speed reducer that reduced the driving force of the electric motor 2 to be transmitted to the differential device 13, the planetary gear type speed reducer 12 is adopted in which the ring gear 24 is coupled to the inner circumferential surface of the housing 11. For this reason, it is possible to sufficiently and greatly reduce the drive power that is transmitted from the electric motor 2 to the differential device 13 without increasing the outer diameter around the axle 10B.

In particular, in the case of the planetary gear type speed reducer 12 that is adopted in this drive device 1, the planetary gears 22 have a structure of coaxially providing the large diameter first gear 26 that is engaged with the sun gear 21 and the second gear 27 with a smaller diameter than the first gear 26, and the ring gear 24 is arranged to the side in the axial direction of the first gear 26 to engage with the second gear 27. For this reason, it is possible to make sufficiently small the outer diameter of the ring gear 24 while maintaining a large diameter of the gear portion of the planetary gears 22 that engages with the sun gear 21. For this reason, it is possible to make the outer diameter around the axle 10B smaller while ensuring a sufficiently large speed reduction ratio.

Also, in this drive device 1, the oil pump 75 that runs on the power of the electric motor 2 is arranged between the electric motor 2 and the synchromesh mechanism 37 in the housing 11, with the synchromesh mechanism 37 being controlled by the hydraulic pressure that is generated by the oil pump 75. For this reason, by shortening the oil passage between the oil pump 75 and the control portion of the synchromesh mechanism 37, it is possible to obtain rapid operation of the synchromesh mechanism 37.

Also, as an engager that performs power connection and disconnection between one wheel and a differential device, it is possible to adopt another mechanism such as a friction clutch that is not limited to the synchromesh mechanism 37. However, in the case of using the gear-type engager such as the synchromesh mechanism 37 of the present embodiment, the pressing force that is applied during power engagement and disengagement is only applied temporarily for a short time, which is advantageous for reducing energy loss by that much. Also; in the gear-type engager such as the synchromesh mechanism 37, the sliding movement resistance in the disengaged state is low compared to a multi-plate clutch or the like, and so it is possible to reduce drive power loss by that much.

Moreover, in the drive device 1 of the present embodiment, the approximately circular control piston 50 that operates the synchro sleeve 49 of the synchromesh mechanism 37 is disposed coaxially with the axle 10B and the synchro sleeve 49, and by applying hydraulic pressure to the control piston 50, connection and disconnection of the synchromesh mechanism 37 is performed. For this reason, by having a uniform force that is always balanced in the circumferential direction act on the synchro sleeve 49, there is the advantage of being able to perform stable engaging-and-disengaging actuation.

Also, in the case of the present embodiment, among the state detection switches 68, 69 which detect the engaging-and-disengaging state of the synchromesh mechanism 37 based on the advance or retreat position of the control piston 50, the state detection switch 68 on the connection detection side is installed obliquely inclined to the peripheral wall 11a of the housing 11. For this reason, the area occupied by the state detection switch 68 in the axial direction in the housing 11 becomes small, and so there is also the advantage of being able to shorten the axial length of the housing 11 by that much.

Moreover, in this drive device 1, the control piston 50 is controlled so that the connection of the synchromesh mechanism 37 is basically performed only during driving of the vehicle by the electric motor 2 or activation of the electric motor 2 in which regenerative power generation or the like is performed. For this reason, it is possible to reduce axle friction in the state of not operating the electric motor 2 and reduce the energy loss during vehicle driving.

Note that the present invention is not limited to the above embodiment, and as such the drive device according to this invention was adopted for the rear wheels, but it can also be similarly adopted for the front wheels.

Hereinbelow, another embodiment of the present invention shall be described with reference to the drawings.

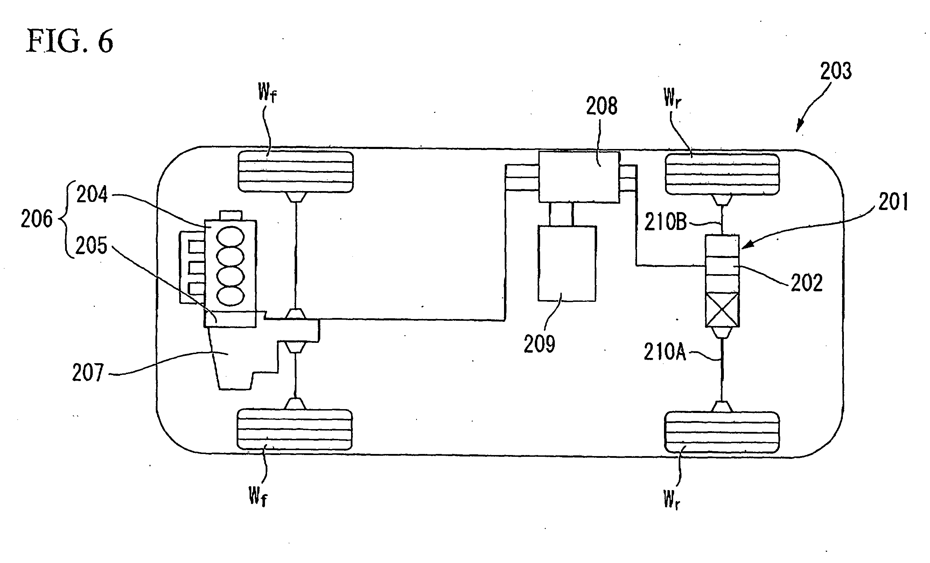

A drive device 201 according to this invention is one that makes an electric motor 202 a driving source for driving the wheels of a vehicle, and for example is used in a vehicle 203 of a drive system such as that shown in FIG. 6.

The vehicle 203 shown in FIG. 6 is a hybrid vehicle that has a driving unit 206 in which an internal combustion engine 204 and an electric motor 205 are connected in series, and the power of this driving unit 206 is transmitted to a front wheel Wf side via a transmission 207. On the other hand, the power of a drive device 201 according to this invention that is provided separately from the driving unit 206 is transmitted to a rear wheel Wr side. The electric motor 205 of the driving unit 206 and an electric motor 202 of the rear wheel Wr side drive device 201 are connected to a battery 209 via a PDU 208 (power drive unit). The power supply from the battery 209 and the energy recovery from the electric motors 205, 202 to the battery 209 are performed via the PDU 208.

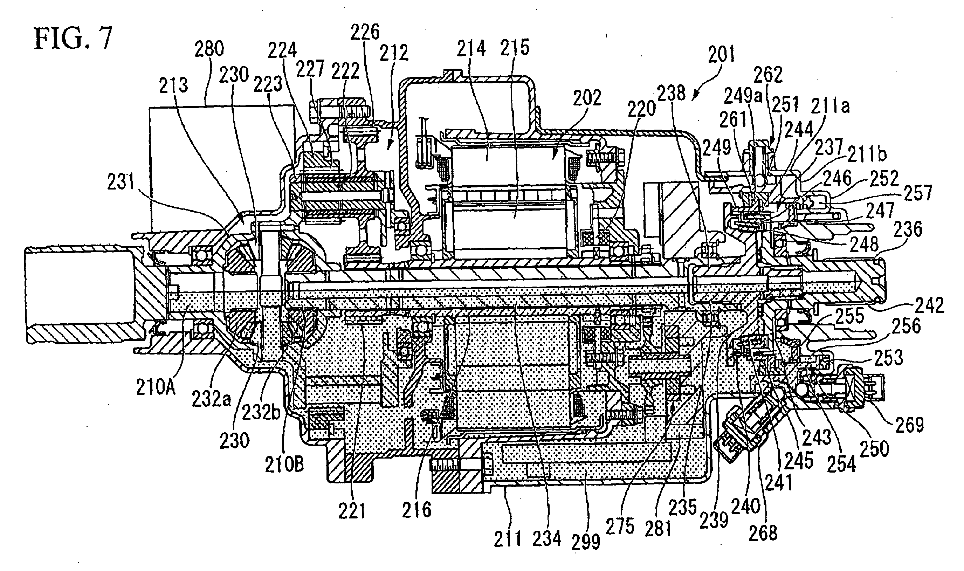

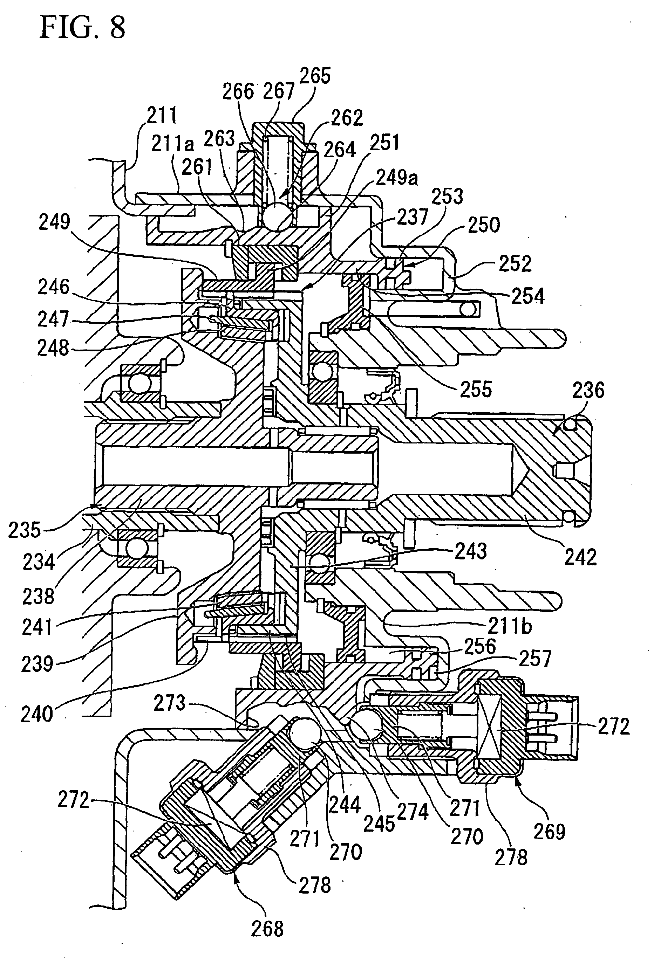

FIG. 7 shows a longitudinal sectional view of the entire drive device 201, and FIG. 8 is a partial enlarged view of FIG. 7. In FIG. 7, 210A, 210B are left and right axles at the rear wheel side of the vehicle. A housing 211 of the drive device 201 is provided so as to cover the outer circumferential side of the one axle 210B from approximately the middle position of both axles 210A, 210B, and is supported and fixed with the axle 210B at the bottom of the rear portion of the vehicle. Also, the housing 211 is overall formed in an approximately cylindrical shape, with the electric motor 202 for driving the axle, a planetary gear type speed reducer 212 (speed reducer) for reducing the driving rotation speed of the electric motor 202, and a differential device 213 that distributes the output of the planetary gear type speed reducer 212 to the left and right axles 210A., 210B housed therein so as to be coaxial with the axle 210B.

A stator 214 of the electric motor 202 is fixed and installed at approximately the center position in the axial direction of the housing 211, and an annular rotor 215 is arranged in a rotatable manner on the inner circumferential side of this stator 214. A cylindrical shaft 216 that surrounds the outer circumferential side of the axle 210B is joined to the inner circumferential portion of the rotor 215, and this cylindrical shaft 216 is supported in a rotatable manner in the housing 211 so as to be coaxial with the axle 210B. Also, a resolver 220 for feeding back rotation position information of the rotor 215 to a control controller (not illustrated) of the electric motor 202 is provided between the outer circumference of the cylindrical shaft 216 and the housing 211.

The planetary gear type speed reducer 212 is provided with a sun gear 221 that is integrally provided on the outer circumference of one end side of the cylindrical shaft 216, a plurality of planetary gears 222 that are engaged with this sun gear 221, a planetary carrier 223 that supports these planetary gears 222, and a ring gear 224 that is engaged with the outer circumferential side of the planetary gears 222. The driving force of the electric motor 202 is input from the sun gear 221, and the reduced driving force is output via the planetary carrier 223.

The planetary gears 222 have a first gear 226 with a large diameter that is directly engaged with the sun gear 221, and a second gear 227 of a smaller diameter than the first gear 226. The first gear 226 and the second gear 227 are integrally formed in a state of being coaxial and offset in the axial direction. The ring gear 224 is fixed and installed at a position facing the side, in the axial direction, of the first gear 226 in the housing 211, and the inner circumferential surface thereof is engaged with the small diameter second gear 227. In the case of this embodiment, the maximum radius of the ring gear 224 is set so as to be smaller than the maximum distance from the center of the axle 210B of the first gear 226.

The differential device 213 is provided with a differential case 231 in which a rotatable pinion 230 is provided in a protruding manner on the inner circumferential side, and a pair of side gears 232a, 232b that are engaged with the pinion 230 in this differential case 231. These side gears 232a, 232b are joined to the left and right axles 210A, 210B respectively. The planetary carrier 223 of the planetary gear type speed reducer 212 is integrally joined to the lateral surface of the differential case 231. Note that the differential case 231 is rotatably supported in the housing 211.

The axle 210B is provided with a first axle 234 in which the side gear 232b of the differential device 213 is provided at one end, a connecting hub 235 that is connected in an integrally rotatable manner to the other end of this first axle 234, and a second axle 236 that is provided in a rotatable manner at the other end in the axial direction of the differential device 213 in the housing 211, with the second axle 236 is connected to the right-side wheel (not illustrated). The connecting hub 235 and the second axle 236 can be changed as desired to an engaged state or disengaged state via a synchromesh mechanism 237 that is an engager. Note that in FIG. 7 and FIG. 8, which are divided along the center axis line of the housing 211, the upper side shows the state of the synchromesh mechanism 237 in the connected state while the lower side shows the synchromesh mechanism 237 in the disconnected state.

The connecting hub 235 is, as shown in FIG. 8, provided with an axle portion 238 that is spline-fitted with the first axle 234 and a flange portion 239 that is integrally formed at the end portion of the axle portion 238. On the outer circumference of the flange portion 239 are provided a spline gear 240 and a tapered surface 241 that is one step smaller in the diameter direction than the spline gear 240 and slopes in a tapered shape.

The second axle 236 on the wheel side is provided with an axle portion 242 to which a connecting rod not illustrated on the right wheel side is spline fitted to one end and a flange portion 243 that is integrally formed at the end portion of the connecting hub 235 side of this axle portion 242. A cylindrical wall 244 that protrudes in the direction of the connecting hub 235 is provided on the outer circumference of the flange portion 243. In addition, a spline gear 245 of the same diameter as the spline gear 240 of the connecting hub 235 is formed on the outer circumferential surface of this cylindrical wall 244.

The synchromesh mechanism 237 is a so-called triple-cone synchromesh mechanism, and is provided with an outer ring 246, a synchrocone 247, and an inner ring 248 that are friction transmission members of three layers interposed between the tapered surface 241 of the connecting hub 235 and the cylindrical wall 244 of the second axle 236. It is also provided with a synchro sleeve 249 that is spline fitted in a slidable manner in the axial direction on the outer circumference of the spline gear 245 of the second axle 236, and a control piston 250 (piston) that makes this synchro sleeve 249 advance and retreat in the axial direction.

In the synchromesh mechanism 237, the outer ring 246, the synchrocone 247, the inner ring 248 and the spline gear 245 make friction contact via their tapered surfaces when the synchro sleeve 249 is operated in the direction of the connecting hub 235 by the control piston 250. When there is a rotation speed differential between the connecting hub 235 and the second axle 236, that rotation speed differential diminishes by the friction resistance between the tapered surfaces. When the rotation speed differential of the connecting hub 235 and the second axle 236 becomes sufficiently low, and moreover the synchro sleeve 249 is operated in the direction of the connecting hub 235, an inner spline (reference number omitted) that is formed on the inner circumferential surface of the synchro sleeve 249 is engaged across the spline gear 245 of the second axle 236 and the spline gear 240 of the connecting hub 245. Thereby, the first axle 234 and the second axle 236 are coupled. Also, when the control piston 250 is operated in the direction of separating from the connecting hub 235 from the state of the first axle 234 and the second axle 236 being coupled, the engagement of the inner spline of the synchro sleeve 249 and the spline gear 240 of the connecting hub 235 is released. Thereby, the connection between the first axle 234 and the second axle 236 is disengaged.

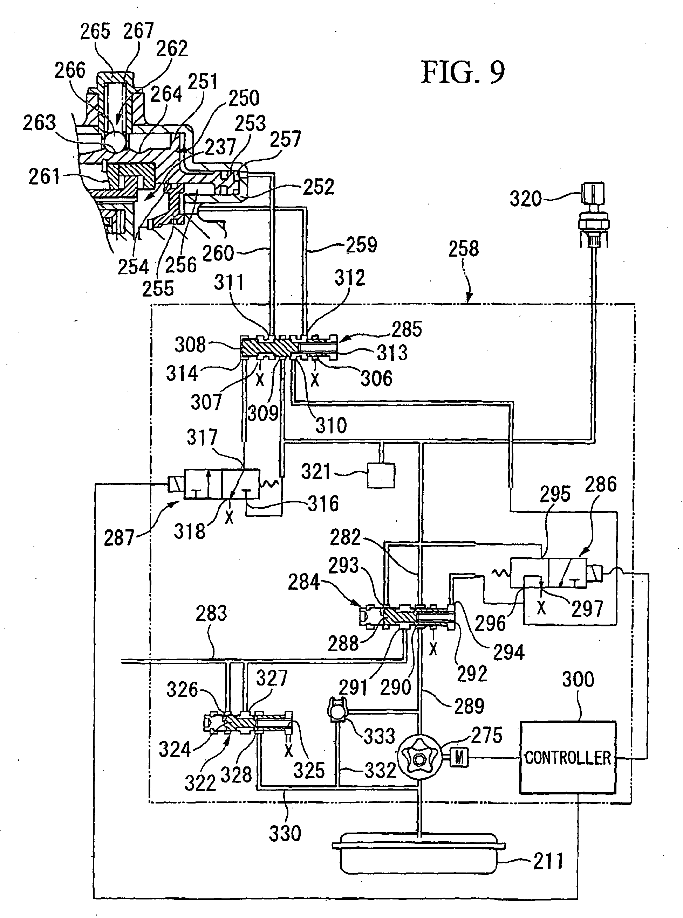

The control piston 250 is provided with a guide wall 251 of an approximately cylindrical shape that is fitted in a freely slidable manner to a peripheral wall 211 a and the end portion of the housing 211, an annular piston body 253 that is fitted in a freely slidable manner in a cylinder portion 252 that is recessed in an annular shape in an end portion wall 21 1b of the housing 211, and a cylindrical coupling wall 254 that couples the guide wall 251 and the piston body 253. Also, an annular seal wall 255 that abuts in a freely slidable manner the inner circumference wall of the coupling wall 254 of the control piston 250 is fixed to the end portion wall 211b of the housing 211. A release side operating chamber 256 is formed in an area that is enclosed by the piston body 253, the coupling wall 254, the seal wall 255, and the cylinder portion 252. Also, a connecting side operating chamber 257 is formed between the piston body 253 and the bottom portion of the cylinder portion 252. The release side operating chamber 256 and the connecting side operating chamber 257 are respectively connected to supply/exhaust passages 259, 260 (refer to FIG. 9) of a hydraulic circuit 258 described below.

Also, an annular retention ring 261 is attached on the inner circumference of the guide wall 251 of the control piston 250, and a locking claw 249a that is provided protruding to the outer circumference of the synchro sleeve 249 is engaged by this retention ring 261. Accordingly, the synchro sleeve 249 is engaged by the control piston 250 via the retention ring 261, and thus operated to advance/retreat in accordance with the operation of the control piston 250

A detent mechanism 262 for positioning the control piston 250 at the before and after set control positions (the control position on the connection side and the control position on the release side) is provided between the peripheral wall 211a of the housing 211 and the guide wall 251 of the control piston 250. This detent mechanism 262 is constituted by location notches 263, 264 of the connection side and release side that are provided along the axial direction on the peripheral surface of the guide wall 251, a ball retainer 265 that is provided passing through the peripheral wall 211a of the housing 211, a ball 266 that is held to be able to freely advance and retreat in the ball retainer 265, and a spring 267 that biases this ball 266 in the axial direction of the control piston 250. When the control piston 250 is hydraulically controlled to either the front or the rear, the ball 266 is fitted in the location notch 263 or 264 in the operation direction thereof by being spring biased. Thereby, the detent mechanism 262 positions the control piston 250 at either of the front or rear set control positions in the axial direction.

Also, a pair of state detection switches 268, 269 which detect the engaging-and-disengaging state of the synchromesh mechanism 237 from the control position of the control piston 250 are provided at the peripheral wall 211a and the end portion wall 211b of the housing 211. In these state detection switches 268, 269, a detection piston 271 that retains a ball 270 at the distal end portion as shown in FIG. 8 is housed in a casing 278, a switch body portion 272 is put in the ON state when the detection piston 271 is pushed in by a preset value by an external force that acts on the ball 270, and an ON signal is output to a controller not shown from this switch body portion 272. The one state detection switch 268 is installed obliquely inclined to the peripheral wall 211a of the housing 211, and the distal end portion projects outward in the housing 211 through the peripheral wall 211 a, and the other state detection switch 269 is installed along the axial direction in the end portion wall 211 b of the housing 211, with the distal end portion thereof projecting in the housing 211 through the end portion wall 211b. A cavity portion 273 for avoiding buffering with the distal end portion of the one state detection switch 268 is provided in the outer periphery of the guide wall 251 of the control piston 250, and a tapered switch operating piece 274 which each ball 270 of the state detection switches 268, 269 selectively abut in accordance with the actuated position of the control piston 250 is provided at the peripheral edge portion on the end portion wall 211b side of the guide wall 251. Note that in the case of this embodiment, the state detection switch 268 that is installed in the peripheral wall 211 a detects the connected state (ON state) of the synchromesh mechanism 237, and the state detection switch 269 that is installed in the end portion wall 211b detects the disconnected state (OFF state) of the synchromesh mechanism 237.

Also, as shown in FIG. 7, an oil pump 275 for supplying hydraulic fluid that is pumped up from the bottom portion of the housing 211 to the cooling passages and lubricating passages in the control piston 250 and the housing 211 and return passage to the reservoir tank 280 is fixed and installed between the electric motor 202 and the synchromesh mechanism 237 in the housing 211. This oil pump 275 is a pump that operates by receiving driving power of the electric motor 202, and is constituted, for example, by a trochoid-type pump. The oil that is provided for cooling and lubrication is collected at the bottom portion of the housing 211. Note that reference numeral 281 in FIG. 7 is an oil strainer that is provided in the intake portion of the oil pump 275.

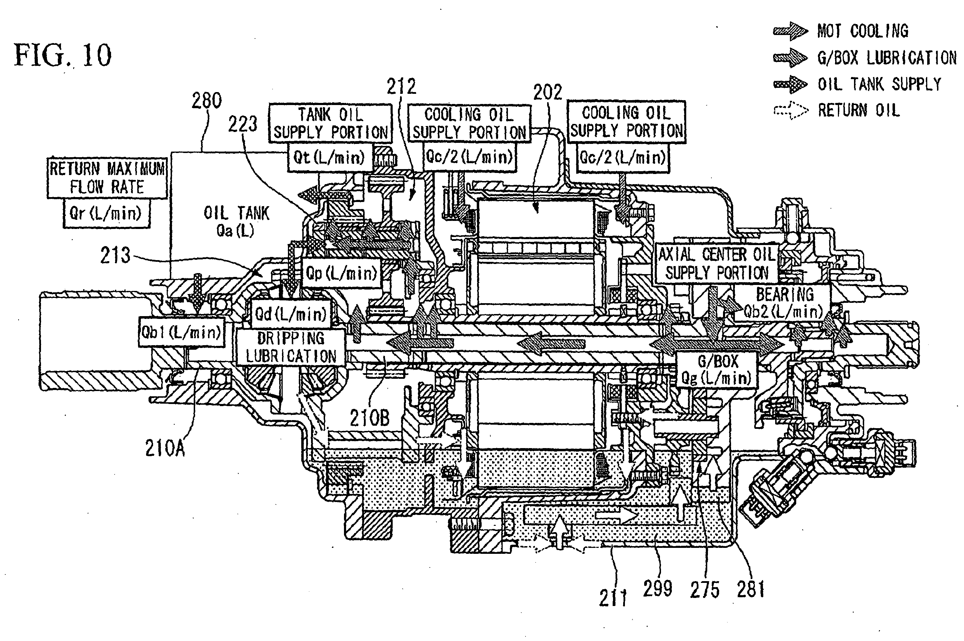

Due to the fact that the oil pump 275 also stops during stoppage of the electric motor 202, a residual oil 299 at the bottom portion of the housing 211 increases as shown in FIG. 7. In contrast, due to the fact that the oil pump 275 also runs during operation of the electric motor 202, the amount of residual oil 299 at the bottom portion of the housing 211 decreases as shown in FIG. 10.

### (Hydraulic Circuit)

Here, the hydraulic circuit 258 shown in FIG. 9 shall be described.

The hydraulic circuit 258 is provided with an oil pump 275 that pumps up and emits the oil at the bottom portion of the housing 211 and a regulator valve 284 that distributes the oil discharged from the oil pump 275 to a high-pressure line passage 282 and a low-pressure passage 283. A return valve 322 that returns oils to the oil pump 275 is provided in the low-pressure passage 283. A supply/exhaust switching valve 285 that selectively connects the line passage 282 to the supply/exhaust passages 259, 260 for controlling the control piston 250 of the synchromesh mechanism 237 is provided in the line passage 282. The regulator valve 284 and the supply/exhaust switching valve 285 are respectively operated by solenoid-operated control valves 286, 287. Note that hereinbelow, the control valve 286 that operates the regulator valve 284 is, for explanation purposes, called the H/L solenoid 286, and the control valve 287 that operates the supply/exhaust switching valve 85 is called the SYN solenoid 287.

The regulator valve 284 is provided with a control spool 288 which is accommodated in a freely slidable manner in valve accommodating chamber (numeral abbreviated), an annular supply port 290 that is formed in the inner circumference surface of approximately the center portion of the valve accommodating chamber to always make a pump side passage 289 and the line passage 282 communicate, an annular exhaust port 291 that is formed in a position adjacent to the supply port 290 of the valve accommodating chamber to communicate with the low-pressure passage 283, a spring 292 that, by being arranged at one end side of the valve accommodating chamber (right side in drawing), biases the control spool 288 to the other end side (left side in drawing), a line pressure introduction port 293 that, by being provided at the other end of the valve accommodating chamber, applies pressure of the line passage 282 in the direction that resists force of the spring 292 on the control spool 288, and a spool control port 294 that, by being provided at one end side of the valve accommodating chamber in which the spring 292 is accommodated, control pressure by the H/L solenoid 286 described later is introduced.

In this regulator valve 284, when the spool control port 294 is controlled to low pressure (drain pressure) by the H/L solenoid 286, the line pressure that acts on the control spool 288 through the line pressure introduction port 293 overcomes the biasing force of the spring 292, and by moving the control spool 288 to the right side in FIG. 9, causes the supply port 290 to connect with the annular exhaust port 291. At this time, the oil that is discharged from the oil pump 275 is supplied to the side of the low-pressure passage 283 via the regulator valve 284. On the other hand, when the spool control port 294 is controlled to a high pressure (line pressure) by the H/L solenoid 286 from this state, the forces that act on the control spool 288 through the line pressure introduction port 293 and the spool control port 294 balance, and the control spool 288 moves to the left side in FIG. 9 by the force of the spring 292. For this reason, almost the entire quality of the oil that is discharged from the oil pump 275 at this time is supplied to the line passage 282 via the regulator valve 284.

The H/L solenoid 286 is a two-position, three-port switching valve that is operated by the ON/OFF of a solenoid, and is provided with a line side port 295 that is connected to the line passage 282, a control port 296 that is connected to the spool control port 294 of the regulator valve 284 and a second supply/exhaust port 310 of the supply/exhaust switching valve 285 described later, and a drain port 297 that is connected to a drain passage. The H/L solenoid 286 is turned ON/OFF by a controller 300. When turned OFF, it connects the control port 296 to the drain port 297, and when turned ON, connects the line side port 295 to the control port 296. That is, when the H/L solenoid 286 is OFF, the spool control port 294 of the regulator valve 284 is put in the low-pressure state, whereby the same valve 284 connects the pump side passage 289 and the low pressure passage 283. In contrast, when the H/L solenoid 86 is ON, the spool control port 294 of the regulator valve 284 is put in the high pressure state, whereby the same valve 284 connects the pump side passage 289 and the low pressure passage 283.

Also, the supply/exhaust switching valve 285 is provided with a control spool 308 that is accommodated in a freely slidable manner in a valve accommodating chamber (numeral abbreviated), annular first and second supply/exhaust ports 309, 310 that are provided parallel in the axial direction in approximately the center portion of the valve accommodating chamber and are respectively connected to the line passage 282 and the valve control port 296 of the H/L solenoid 286, an annular connection side port 311 that is provided at a position adjacent to the first supply/exhaust port 309 of the valve accommodating chamber and connected to the connecting side operating chamber 257 of the control piston 250, a first drain port 307 that is provided at a position adjacent to the connection side port 311 of the valve accommodating chamber, an annular release side port 312 that is provided at a position adjacent to the second supply/exhaust port 310 of the valve accommodating chamber and connected to the release side operating chamber 256 of the control piston 250, a second drain port 306 that is provided at a position adjacent to the release side port 312 of the valve accommodating chamber, a spring 313 that, by being disposed at one end side (right side in the drawing) of the valve accommodating chamber, biases the control spool 308 to the other end side (left side in the drawing), and a spool control port 314 to which, by being provided at the other end of the valve accommodating chamber, control pressure by the SYN solenoid 287 is introduced.

In this supply/exhaust switching valve 285, when the spool control port 314 is controlled to low pressure (drain pressure) by the SYN solenoid 287, the control spool 308 is moved to the left side in FIG. 9 by the biasing force of the spring 313, whereby the second supply/exhaust port 310 is connected to the release side port 312, and the connection side port 311 is connected to the first drain port 307. Here, when the H/L solenoid 286 is controlled to be OFF, the release side port 312 (release side operating chamber 256) and the connection side port 311 (connecting side operating chamber 257) both become the drain pressure, whereby the control piston 250 is put in a non-operating state. When the H/L solenoid 286 is controlled to be ON, the release side port 312 (release side operating chamber 256) becomes the line pressure, while the connection side port 311 (connecting side operating chamber 257) becomes the drain pressure, and as a result, the control piston 250 operates in the synchronization release direction.

On the other hand, when the spool control port 314 is controlled to a high pressure (line pressure) by the SYN solenoid 287 from this state of the H/L solenoid 286 being controlled to be ON, the control spool 308 overcomes the biasing force of the spring 313 and moves to the right side in FIG. 9 and makes the first supply/exhaust port 309 communicate with the connection side port 311 and also makes the release side port 312 communicate with the second drain port 306. Thereby, the connection side port 311 (connecting side operating chamber 257) becomes the line pressure, while the release side port 312 (release side operating chamber 256) becomes the drain pressure, and as a result, the control piston 250 operates in the synchro connection direction.

The SYN solenoid 287 is a two-position, three-port switching valve that is operated by the ON/OFF of a solenoid, and is provided with a line side port 316 that is connected to the line passage 282, a control port 317 that is connected to the spool control port 314 of the supply/exhaust switching valve 285, and a drain port 318 that is connected to a drain passage. This SYN solenoid 287 is turned ON/OFF by a controller 3 00 similarly to the H/L solenoid 286, and when turned OFF, connects the control port 317 to the drain port 318, and when turned ON, connects the line side port 316 to the control port 317. That is, when the SYN solenoid 287 is turned OFF, the spool control port 314 of the supply/exhaust switching valve 285 is put in a low-pressure state, whereby the same valve 285 connects the second supply/exhaust port 310 to the release side port 312 and connects the connection side port 311 to the first drain port 307. In contrast, when the SYN solenoid 287 is turned ON, the spool control port 314 of the supply/exhaust switching valve 285 is put in a high-pressure state, whereby the same valve 285 connects the first supply/exhaust port 309 to the connection side port 311 and connects the release side port 312 to the second drain port 306.

Note that the aforementioned electric motor 202, the H/L solenoid 286, and the SYN solenoid 287 are connected to the controller 300, and operated and controlled by energization from the controller 300.

Also, in FIG. 9, reference numeral 320 denotes a pressure sensor that detects the pressure of the line passage 282 and outputs the signal to the controller 300, and 321 denotes a relief valve that is provided in the line passage 282. Note that a constitution that does not provide the pressure sensor 320 and the relief valve 321 is also acceptable.

The return valve 322 that is provided in the low-pressure passage 283 is provided with a control spool 324 which is accommodated in a freely slidable manner in valve accommodating chamber (numeral abbreviated), an annular supply port 327 that is provided in approximately the center portion of the valve accommodating chamber and connected to the low-pressure passage 283, an exhaust port 328 that is provided at a position adjacent to the supply port 327 and connected to a return passage 330, a spring 325 that, by being arranged at one end side of the valve accommodating chamber (right side in drawing), biases the control spool 324 to the other end side (left side in drawing), and a line pressure introduction port 326 that, by being provided at the other end of the valve accommodating chamber, applies pressure of the low-pressure passage 283 in the direction that resists force of the spring 325 on the control spool 324.

When the line pressure introduction port 326 is at a low pressure, the return valve 322 causes the control spool 324 to move to the left side in FIG. 9 by the biasing force of the spring 325, and thereby cuts off the supply port 327 from the exhaust port 328. In contrast, when the flow quantity of the low-pressure passage 283 increases, and the line pressure introduction port 326 becomes a high pressure, the control spool 324 overcomes the biasing force of the spring 325 and moves to the right side in FIG. 9 and makes the supply port 327 communicate with the exhaust port 328. Thereby, the oil that flows through the low-pressure passage 283 flows into the return passage 330, and the hydraulic pressure of the low-pressure passage 283 is adjusted. The return passage 330 is connected to the upstream side of the oil pump 275. For that reason, the oil that flows through the return passage 330 is directly supplied to the oil pump 275 without returning to the bottom portion of the housing 211. Thereby, it is possible to improve the pumping efficiency of the oil pump 275.

Also, a bypass passage 332 branches from the return passage 330, and is coupled to the pump side passage 289 on the downstream side of the oil pump 275. In order to prevent oil from flowing into the return passage 330 from the pump side passage 289, a check valve 333 is provided. As described above, the oil pump 275 of the present embodiment is a pump that operates by receiving drive power of the electric motor 202. For this reason, when the electric motor is rotated in the reverse direction during backward driving of the vehicle, the oil pump 275 also rotates in the reverse rotation. In this case as well, it is possible to circulate the oil that flows into the return passage 330 from the oil pump 275 by returning it to the pump side passage 289 via the bypass passage 332. Note that since the check valve 333 is provided in the bypass passage 332, during forward rotation of the oil pump 275, it is possible to prevent the oil from flowing into the return passage 330 from the pump side passage 289.

### (Oil Distribution Method)

The oil that flows through the low-pressure passage 283 is supplied to each portion of the vehicle drive device via a plurality of branch passages (not illustrated) and used as cooling oil and lubricating oil.

FIG. 10 is a drawing that explains the oil distribution method. The oil pump 275 pumps up oil from the middle of the bottom portion of the housing 211 via a strainer 281. The oil that is pumped up by the oil pump 275 is supplied to above the electric motor 202 through the cooling passage (not illustrated), and is dropped from a plurality of locations onto the electric motor 202. Thereby, the electric motor 202 is cooled. For example, a total Qc (L/min) of oil is supplied as the cooling oil of the electric motor 202. Also, oil that is pumped up by the oil pump 275 passes through a lubricating passage that is formed along the center axis of the axle 210B to be supplied to each gear such as the planetary gear type speed reducer 212 and the like and also supplied to each bearing of the planetary gear type speed reducer 212 and the cylindrical shaft 216 and the like. Thereby, each gear and each bearing is lubricated. In this case, for example Qg (L/min) oil is supplied as the lubricating oil of each gear and for example Qb2 (L/min) oil is supplied as the lubricating oil of each bearing.

On the other hand, oil that is pumped up by the oil pump 275 is supplied to a reservoir tank 280. The capacity of the reservoir tank is Qa (L), and for example Qt (L/min) oil is supplied to the reservoir tank 280. The supplied oil drops onto each portion of the vehicle drive device from the reservoir tank to be used as lubricating oil. For example, Qp (L/min) lubricating oil is dropped onto the planetary gear type speed reducer 212, Qd (L/min) lubricating oil is dropped onto the differential device 213, and Qb1 (L/min) lubricating oil is dropped onto the bearings of the axle 210A. Note that the remainder Qr (Qt - (Qp + Qd + Qb1) (L/min) of the oil that is supplied to the reservoir tank 280 overflows from the reservoir tank 280 and is recovered at the bottom of housing 211.

In the above manner, the oil pump 275 pumps up for example Qc + Qg + Qb2 + Qt (L/min) oil to be supplied to each portion of the vehicle drive device.

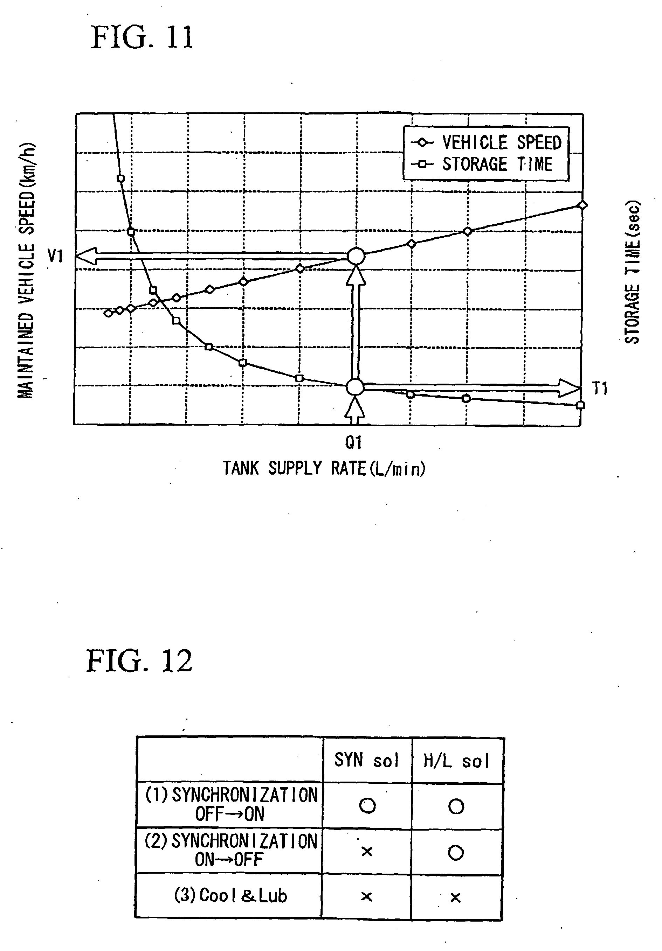

FIG. 11 is a graph that shows the correlation between vehicle speed, tank supply rate, and storage time. In the present embodiment, since the oil pump 275 is driven by the electric motor 202 for vehicle driving, the faster the vehicle speed, the greater the oil supply rate (tank supply rate) from the oil pump 275 to the reservoir tank 280. For that reason, the vehicle speed is proportional to the tank supply rate. Also, the greater the tank supply rate, the shorter the time required for oil storage to the reservoir tank 280 (storage time), and so the storage time is inversely proportional to the tank supply rate. As an example, in the case of the tank supply rate being Q 1 (L/min), the vehicle speed is V 1 (km/h) and the storage time is T1 (sec).

This storage time matches the lowering time of the remaining oil quantity of the bottom portion of the housing. For that reason, using FIG. 11, it is possible to predict the residual oil quantity reduction time. Moreover, using FIG. 11, it is possible to determine the tank supply rate for reducing the residual oil quantity within a predetermined time.

Next, the operation of the hydraulic circuit of the vehicle drive device in various travel modes of the vehicle shall be described. (Vehicle start, acceleration)

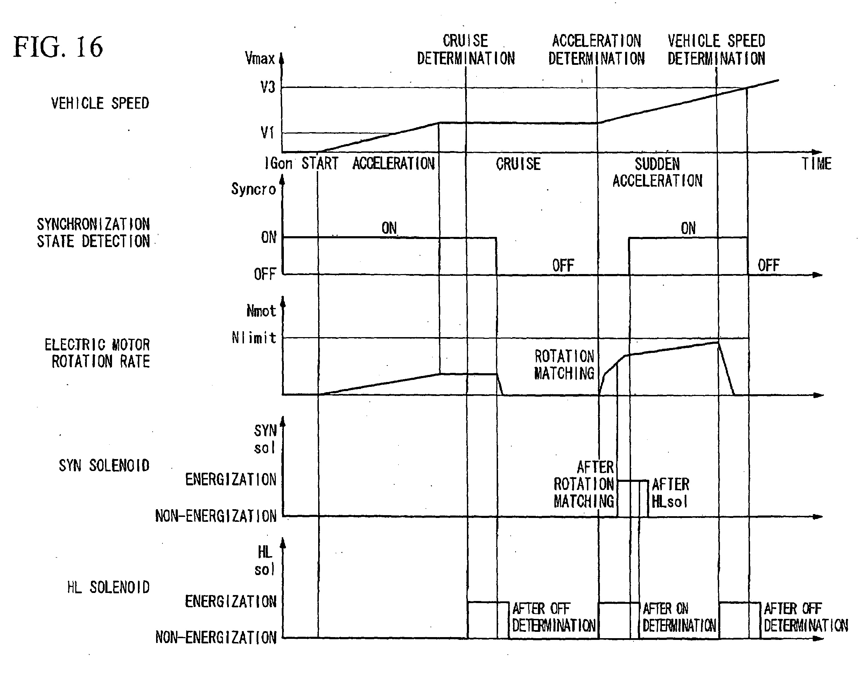

FIG. 16 is a first timing chart of the hydraulic circuit of the vehicle drive device according to the present embodiment. First, a description shall be given for starting/acceleration of the vehicle. When the electric motor 202 is activated during starting of the vehicle, the driving force of the electric motor 202 is reduced to a set speed reduction ratio by the planetary gear type speed reducer 212 and transmitted to the left and right axles 210A, 210B of the vehicle via the differential device 213. At this time, in order to transmit the drive power from the electric motor 202 to the wheels, the synchromesh mechanism 237 is put in the connection state. For that reason, the drive power that is distributed by the differential device 213 is transmitted to the wheels via the left and right axles 210A, 210B. Here, the hydraulic circuit of the vehicle drive device is set to the cooling and lubricating mode in order to perform cooling of the electric motor 202 and lubrication of the power transmission mechanism (the planetary gear type speed reducer 212 and the differential device 213).

FIG. 12 is a correspondence table of the hydraulic circuit mode and solenoid operation. In FIG. 12, the case of the solenoid being turn ON is denoted by ○, and the case of the solenoid being turned OFF is denoted by ×. As shown in FIG. 12 (3), in the cooling and lubricating mode, the SYN solenoid 287 and the H/L solenoid 286 are both turned OFF.

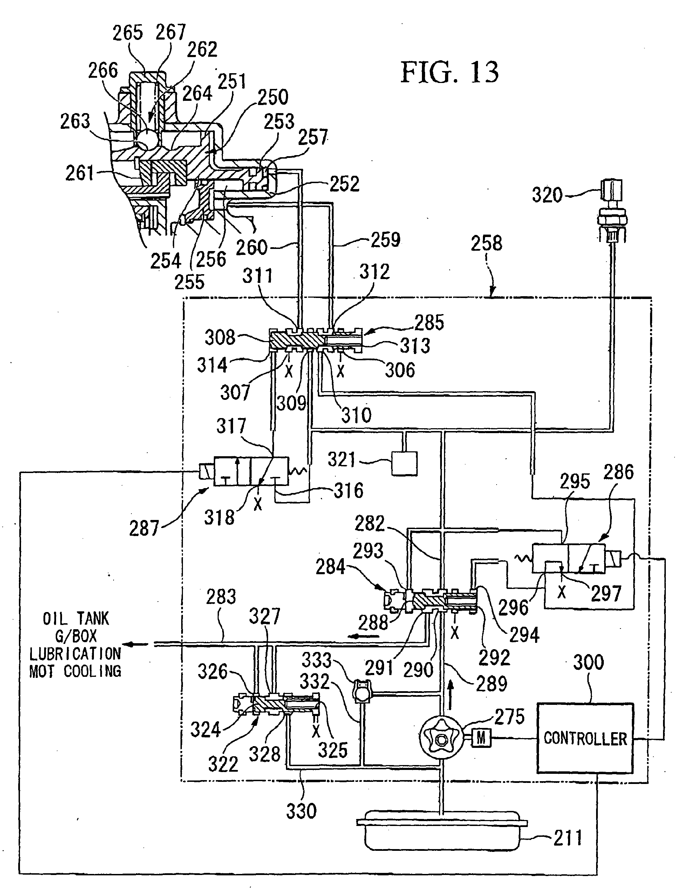

FIG. 13 is a drawing explaining the operation of the hydraulic circuit in the cooing-lubricating mode. Together with the activation of the electric motor 202, the rotation rate of the oil pump 275 increases, and when the pressure of the line passage 282 rises as shown in FIG. 9, the pressure of the line pressure introduction port 293 of the regulator valve 284 rises, and the control spool 288 of the regulator valve 284 moves to the right side in the drawing. Thereby, the supply port 290 and the annular exhaust port 291 become connected, and oil that is discharged from the oil pump 275 is supplied to the low-pressure passage 283.

The oil that is supplied to the low-pressure passage 283 is supplied to the electric motor 202 as cooling oil and supplied to the power transmission mechanism as lubricating oil as shown in FIG. 10. Moreover, because of the fact that the oil is supplied to the reservoir tank 280 to be temporarily stored, the amount of residual oil 299 at the bottom portion of the housing 211 decreases (low oil surface cooling and lubricating mode). For that reason, it is possible to suppress the agitating action of the residual oil 299 by each gear of the power transmission mechanism to a minimum level, and so possible to minimize drive power loss. Also, a reduction in friction of the electric motor 202 due to the residual oil becomes possible, and so it is possible to lower drive power loss.

### (Cruise Travel)

Returning to FIG. 16, the case of completing acceleration and then cruising at a constant vehicle speed shall be described. In this case, the necessity of transmitting power from the electric motor 202 to the wheels diminishes. Therefore, the synchromesh mechanism 237 is switched from the connected state (ON state) to the disconnected state (OFF state). As shown in FIG. 12 (2), in the synchronization OFF switching mode, only the H/L solenoid 286 is turned ON, with the SYN solenoid 287 remaining OFF. Specifically, as shown in FIG. 16, at the point in time of the controller 300 judging the vehicle to be in the cruise traveling state, the controller 300 turns ON the H/L solenoid 286.

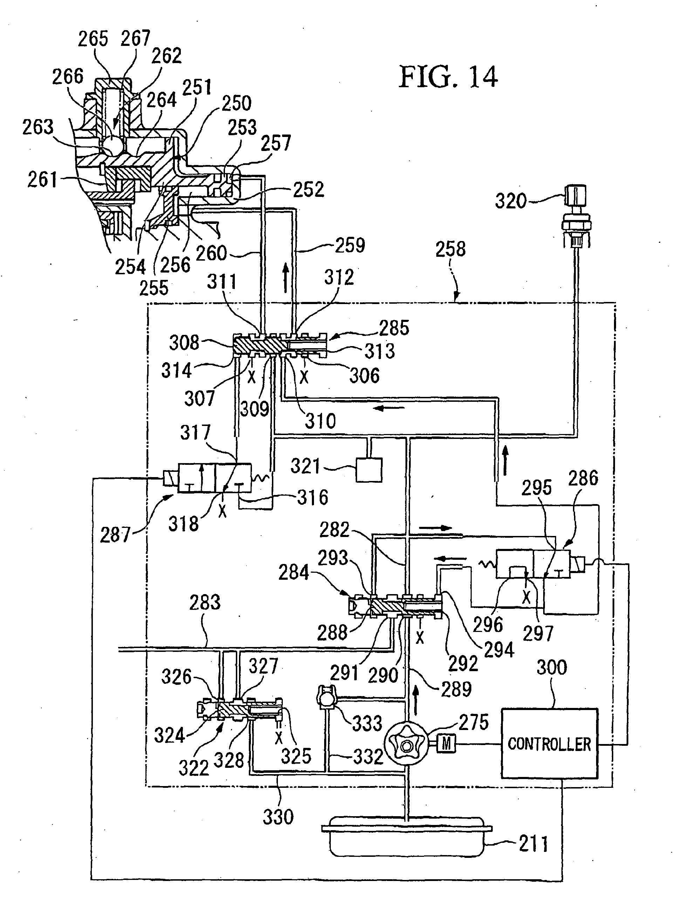

FIG. 14 is a drawing that explains the operation of the hydraulic circuit in the synchronization OFF switching mode. The controller 300 turns ON the H/L solenoid 286 and connects the line side port 295 of the same solenoid 286 to the valve control port 296. In this way, when the high pressure line pressure is introduced to the valve control port 296, the regulator valve moves to the left side in FIG. 9, and almost the entire flow volume of oil that is discharged from the oil pump 275 is supplied to the line passage 282, while the oil of the line passage 282 is supplied to the second supply/exhaust port 310 of the supply/exhaust switching valve 285 via the valve control port 296. At this time, since the SYN solenoid 287 is put in the OFF state, the supply/exhaust switching valve 285 connects the second supply/exhaust port 310 to the release side port 312, and connects the connection side port 311 to the first drain port 307. Accordingly, while the high-pressure hydraulic oil is supplied to the release side operating chamber 256 at this time, the hydraulic oil is discharged from the connecting side operating chamber 257, and as a result, the control piston 250 operates in the synchronization release direction to put the synchromesh mechanism 237 in the release state. Note that the control piston 250 at this time is reliably maintained in the synchronization release position by the detent mechanism 262.

Returning to FIG. 16, the synchromesh mechanism 237 is released, and when this is detected by the state detection switch 269, the controller 300 stops operation of the electric motor 202 and starts the internal combustion engine 204, and subsequently turns OFF the H/L solenoid 286 again. At this time, although the hydraulic oil of the release side operating chamber 256 and the connecting side operating chamber 257 is drained, once the engagement of the synchromesh mechanism 237 is released, since that state is maintained, there is no need to continue the application of high pressure in the release side operating chamber 256.

Once the synchromesh mechanism 237 is released as shown in FIG. 7, since the connection of the differential device 213 and the right side wheel is disengaged, the right side wheel rotates in a free state, and the right-side side gear 232b of the differential device 213 enters a nearly no-load state. For this reason, the rotating force of the left-side wheel, without being transmitted for the most part from the left-side side gear 232a to the differential case 231, causes rotation of only the right-side side gear 232b (the first axle 234 of the right side axle 210B). Accordingly, the rotation of the left and right wheels at this time is blocked by the differential case 231 portion of the differential device 213 and so is not transmitted to the planetary gear type speed reducer 212 and the electric motor 202. As a result, there is of course no rotation as a result of the electric motor 202 being dragged by the rotation of the wheels, and follow rotation of the differential case 231 and the planetary gear type speed reducer 212 also does not occur.

In this way, with the stoppage of the electric motor 202, because the motion of the power transmission mechanism such as the planetary gear type speed reducer 212 and the differential case 231 of the differential device 213 also stops, the need to cool and lubricate them is eliminated. In this embodiment, since the operation of the oil pump 275 stops along with the stopping of the electric motor 202, the supply of oil to the electric motor 202, the power transmission mechanism and the reservoir tank 280 stops. As a result, the amount of residual oil 299 at the bottom portion of the housing 211 increases, and so the lower half portion of the housing 211 for example becomes submerged in oil. Due to this residual oil 299, it is possible to sufficiently perform cooling and lubrication of the side gear 232 that spins idly in the differential device 213 (high oil surface cooling and lubricating mode). Accordingly, it is possible to prevent seizure and abnormal wear of the side gear 232.

### (Sudden Acceleration)

Returning to FIG. 16, the case of completing the cruising state and performing sudden acceleration shall be described. In this case, there is a need to transmit power from the electric motor 202 to the wheels, and so the synchromesh mechanism 237 is switched from the disconnected state (OFF state) to the connected state (ON state). As shown in FIG. 12 (1), in the synchro ON switching mode, both the H/L solenoid 286 and the SYN solenoid 287 are turned ON. Specifically, as shown in FIG. 16, when the state of sudden acceleration is judged by the controller 300, the controller 300 restarts the electric motor 202 to control the rotation rate of the electric motor 202 so as to match the current vehicle speed. At the same time as this, the controller 300 turns ON the H/L solenoid 286. Moreover, after completion of the rotation frequency matching of the electric motor, the controller 300 turns ON the SYN solenoid 287.

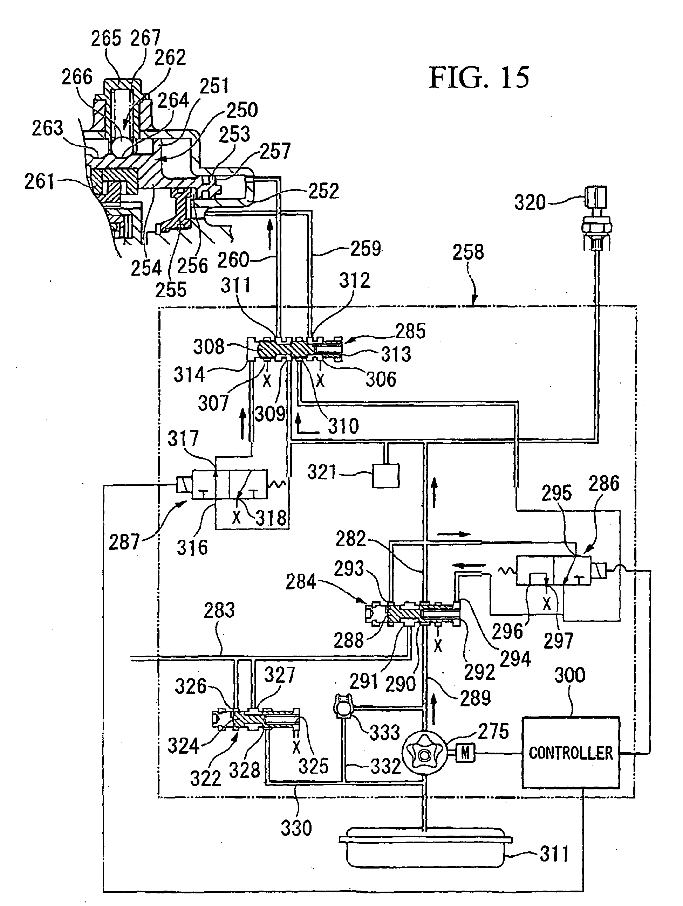

FIG. 15 is a drawing that explains the operation of the hydraulic circuit in the synchro ON switching mode. The H/L solenoid 286 is turned ON, and by connecting the line side port 295 of the same solenoid 286 to the valve control port 296, the supply of oil from the oil pump 275 is switched to the line passage 282 side by the regulator valve 284. After this, the controller 300 turns ON the SYN solenoid 287, connects the line side port 316 of the same solenoid 287 to the control port 317, and moves the supply/exhaust switching valve 285 to the right side in FIG. 9. Thereby, the supply/exhaust switching valve 285 connects the first supply/exhaust port 309 to the connection side port 311 and connects the release side port 312 to the second drain port 306. Accordingly, while the high-pressure hydraulic oil is supplied from the line passage 282 to the connecting side operating chamber 257 at this time, the hydraulic oil is discharged from the release side operating chamber 256. As a result, the control piston 250 operates in the synchronization release direction to put the synchromesh mechanism 237 in the connected state. Note that the control piston 250 at this time as well is reliably maintained in the synchro connection position by the detent mechanism 262.

Returning to FIG. 16, the synchromesh mechanism 237 is connected, and when this is detected by the state detection switch 268, the controller 300 turns OFF the H/L solenoid 286, and thereafter continues to turn OFF the SYN solenoid 287. This is because turning the SYN solenoid 287 OFF first with the H/L solenoid 286 left ON leads to the synchro OFF switching mode, and so the synchromesh mechanism 237 ends up becoming disconnected. In this way, when the H/L solenoid 286 and the SYN solenoid 287 are turned OFF, although the hydraulic oil of the connecting side operating chamber 257 and the release side operating chamber 256 is drained, once the synchromesh mechanism 237 is put in an engaged state, since that state is maintained, there is no need to continue the application of high pressure in the connecting side operating chamber 257. The oil that is discharged from the oil pump 275 at this time is again supplied to the low-pressure passage 283.

When the H/L solenoid 286 and the SYN solenoid 287 are both turned OFF, the transition is made to the cooling and lubricating mode shown in FIG. 12(3). Here, since the electric motor 202 is restarted, the hydraulic circuit of the vehicle drive device enters the low oil surface cooling and lubricating mode. Thereby, the cooling oil is supplied to the electric motor 202, whereby the electric motor 202 is cooled, and the lubricating coil is supplied to the power transmission mechanism, whereby the gears thereof are lubricated.

### (Electric motor overspeed prevention)

Returning to FIG. 16, at the point in time when the vehicle speed has exceeded a predetermined value V3, the case of stopping the electric motor 202 in order to prevent overspeed of the electric motor 202 shall be described. In this case, it is necessary to block the rotation of the wheels from being transmitted to the electric motor. Therefore, the synchromesh mechanism 237 is switched from a connected state (ON state) to a disconnected state (OFF state). As shown in FIG. 12 (2), in the synchro OFF switching mode, only the H/L solenoid 286 is turned ON, with the SYN solenoid 287 remaining OFF. Specifically, as shown in FIG. 16, at the point in time in which the controller 300 determines the vehicle speed to have risen above the first predetermined value V3, the controller 300 turns ON the H/L solenoid 286. Then, the hydraulic circuit is activated as shown in FIG. 14, and the synchromesh mechanism 237 is released.

The synchromesh mechanism 237 is released, and when this is detected by the state detection switch 269, the controller 300 stops operation of the electric motor 202 and subsequently turns OFF the H/L solenoid 286 again. Accompanying the stoppage of the electric motor 202, the hydraulic circuit of the vehicle drive device enters the high oil surface cooling and lubricating mode, and so cooling and lubricating of the side gear 232 that is running idle in the differential device 213 is performed.

### (Regenerative deceleration)

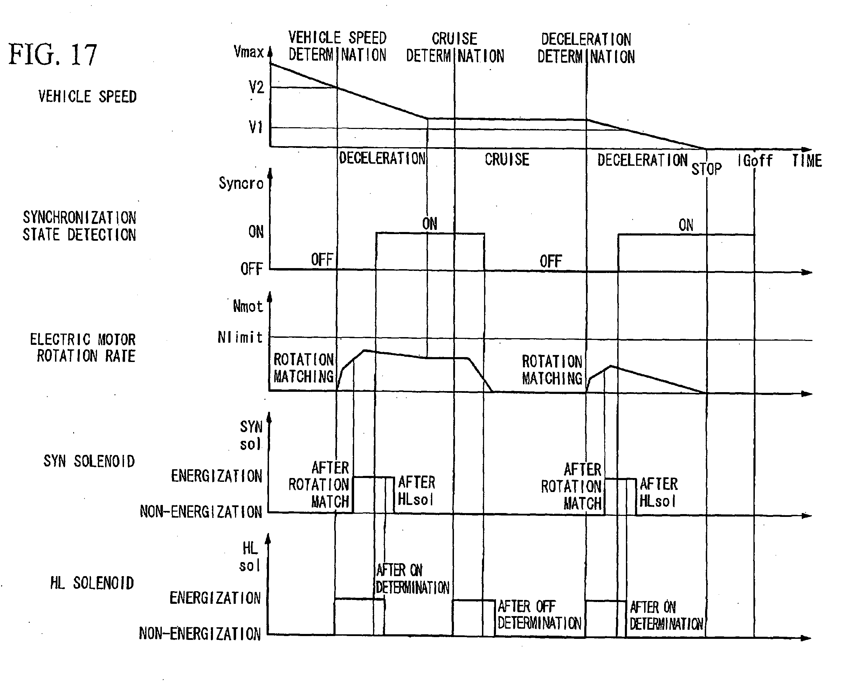

FIG. 17 is a second timing chart of the hydraulic circuit of the vehicle drive device according to the present embodiment. First, a description shall be given for the case of performing energy generation from the electric motor to the battery during deceleration of the vehicle. In this case, there is a need to transmit the rotation of the wheels to the electric motor 202. Therefore, the synchromesh mechanism 237 is switched from the disconnected state (OFF state) to the connected state (ON state). As shown in FIG. 12 (1), in the synchro ON switching mode, both the H/L solenoid 286 and the SYN solenoid 287 are turned ON. Specifically, as shown in FIG. 17, at the point in time at which the controller 300 has determined that the vehicle speed has fallen below a second predetermined value V2 (< first predetermined valve V3), the controller 300 restarts the electric motor 202 to control the rotation rate of the electric motor 202 so as to match the current vehicle speed. At the same time as this, the controller 300 turns ON the H/L solenoid 286. After the rotation frequency adjustment of the electric motor, the controller 300 turns ON the SYN solenoid 287. Then, the hydraulic circuit is activated as shown in FIG. 15, and the synchromesh mechanism 237 is connected.

When the synchromesh mechanism 237 is connected, the electric motor co-rotates along with the rotation of the wheels, and as a result electrical generation is performed. The generated electricity is stored in the battery, and in this way energy regeneration is performed.

In this way, the synchromesh mechanism 237 is connected, and when this is detected by the state detection switch 268, the controller 300 turns OFF the H/L solenoid 286, and thereafter continues to turn OFF the SYN solenoid 287. Since the electric motor 202 is operating, the hydraulic circuit of the vehicle drive device enters the low oil surface cooling and lubricating mode. Thereby, the cooling oil is supplied to the electric motor 202, whereby the electric motor 202 is cooled, and the lubricating coil is supplied to the power transmission mechanism, whereby the gears thereof are lubricated.

Returning to FIG. 16, the case of completing decelerating regenerative power generation and cruising shall be described. In this case, since the necessity of transmitting power from the electric motor 202 to the wheels diminishes, the synchromesh mechanism 237 is switched from the connected state (ON state) to the disconnected state (OFF state). As shown in FIG. 12 (2), in the synchro OFF switching mode, only the H/L solenoid 286 is turned ON, with the SYN solenoid 287 remaining OFF. Specifically, at the point in time of the controller 300 judging the vehicle to be in the cruise traveling state, the controller 300 turns ON the H/L solenoid 286. Then, the hydraulic circuit is activated as shown in FIG. 14 to release the synchromesh mechanism 237.

The synchromesh mechanism 237 is released, and when this is detected by the state detection switch 269, the controller 300 stops operation of the electric motor 202 and subsequently turns OFF the H/L solenoid 286 again. Accompanying the stoppage of the electric motor 202, the hydraulic circuit of the vehicle drive device enters the high oil surface cooling and lubricating mode, and so cooling and lubricating of the side gear 232 that is running idle in the differential device 213 is performed.

### (Deceleration, vehicle stopping)

Returning to FIG. 16, the case of stopping the vehicle shall be described. Prior to stopping the vehicle, it is necessary to link the wheels and the electric motor 202 in order to achieve balance between the front and rear wheels while performing decelerating regenerative power generation. Therefore, the synchromesh mechanism 237 is switched from the disconnected state (OFF state) to the connected state (ON state). The specific method is the same as the method outlined above for decelerating regenerative power generation.

As described above, in this vehicle drive device 201 shown in FIG. 7, the synchromesh mechanism 237 is provided in the one axle 210B that connects the right-side wheel and the differential device 213, with the connection of the right-side wheel and the differential device 213 cut off by this synchromesh mechanism 237. Thereby, it is possible to prevent the rotation of the left and right wheels from being transmitted to the differential case 231. For this reason, in the case of driving by disengaging the wheels from the electric motor 202, it is possible to prevent co-rotation of the differential case 231 and the planetary gear type speed reducer 212, which are heavy loads, in addition to the electric motor 202. Accordingly, by adopting this drive device 201, it is possible to substantially reduce axle friction in the case of driving with the wheels disengaged from the electric motor 202 side, and so possible reliably reduce drive power loss of the vehicle.

Also, in this drive device 201, since the electric motor 202 is coaxially disposed around the one axle 210B, it is possible to reduce the overall outer diameter of the device. Accordingly, since it is possible to reduce the occupying area of the drive device 201 in the vehicle, it is possible to optimize the vehicle layout.

Moreover, in this vehicle device 201, as a speed reducer that reduces the driving force of the electric motor 202 to be transmitted to the differential device 213, the planetary gear type speed reducer 212 is adopted in which the ring gear 224 is coupled to the inner circumferential surface of the housing 211. For this reason, it is possible to sufficiently and greatly reduce the drive power that is transmitted from the electric motor 202 to the differential device 213 without increasing the outer diameter around the axle 210B.

In particular, in the case of the planetary gear type speed reducer 212 that is adopted in the drive device 201, the planetary gears 222 have a structure of coaxially providing the large diameter first gear 226 that is engaged with the sun gear 221 and the second gear 227 with a smaller diameter than the first gear 226, and the ring gear 224 is arranged to the side in the axial direction of the first gear 226 to engage with the second gear 227. For this reason, it is possible to make sufficiently small the outer diameter of the ring gear 224 while maintaining a large diameter of the gear portion of the planetary gears 222 that engages with the sun gear 221. For this reason, it is possible to make the outer diameter around the axle 210B smaller while ensuring a sufficiently large speed reduction ratio.

Also, in this drive device 201, the oil pump 275 that runs on the power of the electric motor 202 is arranged between the electric motor 202 and the synchromesh mechanism 237 in the housing 211, with the synchromesh mechanism 237 being controlled by the hydraulic pressure that is generated by the oil pump 275. For this reason, by shortening the oil passage between the oil pump 275 and the control portion of the synchromesh mechanism 237, it is possible to obtain rapid operation of the synchromesh mechanism 237.

Also, as an engager that performs power connection and disconnection between one wheel and a differential device, it is possible to adopt another mechanism such as a friction clutch that is not limited to the synchromesh mechanism 237. However, in the case of using the gear-type engager such as the synchromesh mechanism 237 of the present embodiment, the pressing force that is applied during power engagement and disengagement is only applied temporarily for a short time, which is advantageous for reducing energy loss by that much. Also, in the gear-type engager such as the synchromesh mechanism 237, the sliding movement resistance in the disengaged state is low compared to a multi-plate clutch or the like, and so it is possible to reduce drive power loss by that much.

Moreover, in the drive device 201 of the present embodiment, the approximately circular control piston 250 that operates the synchro sleeve 249 of the synchromesh mechanism 237 is disposed coaxially with the axle 210B and the synchro sleeve 249, and by applying hydraulic pressure to the control piston 250, engagement and disengagement of the synchromesh mechanism 237 is performed. For this reason, by having a uniform force that is always balanced in the circumferential direction act on the synchro sleeve 249, there is the advantage of being able to perform stable engaging-and-disengaging actuation.

Also, in the case of the present embodiment, among the state detection switches 268, 269 which detect the engaging-and-disengaging state of the synchromesh mechanism 237 based on the advance or retreat position of the control piston 250, the state detection switch 268 on the connection detection side is installed obliquely inclined to the peripheral wall 211a of the housing 211. For this reason, the area occupied by the state detection switch 268 in the axial direction in the housing 211 becomes small, and so there is also the advantage of being able to shorten the axial length of the housing 211 by that much.

Moreover, in this drive device 201, the control piston 250 is controlled so that the connection of the synchromesh mechanism 237 is basically performed only during driving of the vehicle by the electric motor 202 or activation of the electric motor 202 in which regenerative power generation or the like is performed. For this reason, it is possible to reduce axle friction in the state of not operating the electric motor 202 and reduce the energy loss during vehicle driving.

Meanwhile, the hydraulic circuit of the vehicle drive device 201 shown in FIG. 9 is constituted by the oil pump 275 that is driven by the electric motor 202, the line passage 282 that supplied hydraulic oil from the oil pump 275 to the synchromesh mechanism 237, a low-pressure passage 283 that supplied lubricating oil from the oil pump 275 to the differential device 213, the regulator valve 284 that switches the oil supply passage to the line passage 282 or the low-pressure passage 283, the H/L solenoid 286 that controls the operation of the regulator valve 284, and the controller 300 that controls the operation of the H/L solenoid 286.

Thereby, even in the case of adopting the oil pump 275 that is driven by the electric motor 202, stable cooling and lubrication is performed by normally supplying cooling oil and lubricating oil to the low pressure passage 283, and by supplying lubricating oil to the line passage 282 during engagement-disengagement switching of the synchromesh mechanism 237, it is possible to perform engagement-disengagement switching at a high pressure. Accordingly, since the hydraulic pressure is adjusted to high pressure only when performing engaging-and-disengaging switching and adjusted to a low pressure otherwise, by limiting the frequency of controlling the oil pump 275 at a high pressure, it is possible to decrease losses of the oil pump 275.

Also, it is provided with the supply/exhaust switching valve 285 switches the supply path of the hydraulic oil depending on the engaging-and-disengaging switching of the synchromesh mechanism 237, the SYN solenoid 287 that controls the operation of the supply/exhaust switching valve 285, and the controller 300 that controls the operation of the SYN solenoid 287.

Thereby, it is possible to perform engaging-and-disengaging switching of the synchromesh mechanism 237 without performing pressure detection or pressure adjustment and the like of the line passage 282. Accordingly, it is possible to reduce losses of the oil pump.

Also, the controller 300 is constituted to activate both the H/L solenoid 286 and the SYN solenoid 287 when switching the synchromesh mechanism 237 from the disengaged state to the engaged state, and activate only the H/L solenoid 286 when switching the synchromesh mechanism 237 from the engaged state to the disengaged state. Thereby it is possible to easily perform switching of the synchromesh mechanism 237.

Also, the controller 300, after switching the synchromesh mechanism 237 from the disengaged state to the engaged state, is constituted to initially stop the H/L solenoid 286 and next stop the SYN solenoid 287.

Initially stopping the SYN solenoid 287 leads to the state of only the H/L solenoid 286 operating, and so the synchromesh mechanism 237 ends up reverting to the disengaged state, but in the present invention, it is possible to maintain the engaged state of the synchromesh mechanism 237.

Also, it is provided with the housing 211 that houses the electric motor 202, the planetary gear type speed reducer 212, and the differential device 213 and to which the oil is recovered, and reservoir tank 280 that is separated from the housing 211 and that temporarily stores oil during forward driving of the electric motor 202.

Thereby, during forward driving of the electric motor 202, oil is temporarily stored in the reservoir tank 280, and so it is possible to reduce the quantity of residual oil in the housing 211. Accompanying this, it is possible to suppress the agitating action of the residual oil by each gear of the power transmission mechanism to a minimum level, and possible to reduce the friction of the electric motor 202 due to the residual oil. Accordingly, it is possible to reduce drive power loss. On the other hand, when stopping the electric motor 202, since oil flows out of the reservoir tank 280 to the housing 211, it is possible to increase the amount of residual oil of the housing 211. Accompanying this, it is possible to sufficiently cool and lubricate the side gear 232 of the differential device 213 that spins idly in the housing 211 by disengagement of the synchromesh mechanism 237. Accordingly, it is possible to prevent seizure and abnormal wear of the side gear 232. From the above, it is compatible with both reduction of drive power loss and prevention of seizure.

Also, the low-pressure passage 283 is constituted to supply lubricating oil to the planetary gear type speed reducer 212 in addition to the differential device 213, and supply oil the reservoir tank 280.

Thereby, after supplying the required oil for lubrication of the differential device 213 and the planetary gear type speed reducer 212, it is possible to supply the remaining oil to the reservoir tank 280. Accordingly, it is possible to ensure lubrication of the differential device 213 and the planetary gear type speed reducer 212.

Also, the reservoir tank 280, in the case of the amount of stored oil being above a predetermined amount, lets out oil to the housing 211. Thereby, it is possible to adjust the amount of residual oil in the housing 211 during forward driving of the electric motor 202.

While preferred embodiments of the invention have been described and illustrated above, it should be understood that these are exemplary of the invention and are not to be considered as limiting. For example, in the above-mentioned embodiment, the drive device according to this invention was adopted for the rear wheels, but it can also be similarly adopted for the front wheels. Also, the constitution of the hydraulic circuit in the above embodiment is just one example, and it is also possible to adopt other constitutions that exhibit the same function. Accordingly, the invention is not to be considered as being limited by the foregoing description, and is only limited by the scope of the appended claims.

## Claims

1. A vehicle drive device (1) comprising:
an electric motor (2) that drives wheels of a vehicle;
a speed reducer (12) that reduces a driving rotation rate of the electric motor (2);
a differential device (13) that distributes an output of the speed reducer (12) to a left wheel and a right wheel of the vehicle; and
an engager (37) that is provided between either one of the left wheel or the right wheel of the vehicle and the differential device (13), and performs an engagement and a disengagement of a drive power therebetween.

2. The vehicle drive device (1) according to claim 1, further comprising:
a wheel axle (10B) that connects either one of the left wheel or the right wheel of the vehicle and the differential device (13), wherein the electric motor (2) is disposed around the wheel axle (10B).

3. The vehicle drive device (1) according to any of the preceding claims, further comprising:
a wheel axle (10B) that connects either one of the left wheel or the right wheel of the vehicle and the differential device (13),
wherein:
the speed reducer (12) is a planetary gear type speed reducer (12) that is disposed around the wheel axle (10B); and
the planetary gear type speed reducer (12) has a ring gear (24) that is connected to the inner side of a housing (11) fixed on a vehicle body.

4. The vehicle drive device (1) according to any of the preceding claims, wherein:
the planetary gear type speed reducer (12) has a sun gear (21), a first gear (26) that is engaged with the sun gear (21), and a second gear (27) that is integrally provided laterally to an axial direction of the first gear (26) and has a smaller diameter than the first gear (26); and
the ring gear (24) is engaged with a circumference side of the second gear (27).

5. The vehicle drive device (1) according to any one of claims 1 to 4, further comprising:
an oil pump (75) that is disposed between the electric motor (2) and the engager (37) and, by being driven by the electric motor (2), supplies a hydraulic fluid to the engager (37), wherein the engager (37) has a hydraulic engager (37) that performs the engagement and the disengagement of the drive power by a hydraulic pressure.

6. The vehicle drive device (1) according to any one of claims 1 to 5, wherein the engager (37) is a gear-type engager (37).

7. The vehicle drive device (1) of claim 6, wherein
the gear-type engager (37) switches between the engagement and the disengagement by applying a hydraulic pressure to a piston (50) that is arranged coaxially with a wheel axle (10B).

8. The vehicle drive device (1) according to any of the preceding claims, further comprising:
a state detection switch (68, 69) that detects the engagement-disengagement state of the gear-type engager (37) by abutting the piston (50) during a set displacement of the piston (50), wherein
the state detection switch (68) is installed obliquely inclined to a peripheral wall of a housing (11) fixed on a vehicle body.

9. The vehicle drive device (1) according to any one of claims 1 to 8, wherein the engager (37) enters an engaged state when the electric motor (2) is in an operating state, and enters a disengaged state when the electric motor (2) is in a non-operating state.

10. The vehicle drive device (1) according to any of the preceding claims, further comprising:
an oil pump (75) that is driven by the electric motor (2);
an actuating oil passage (82) that supplies a volume of oil from the oil pump (75) to the engager (37);
a lubricating oil passage (83) that supplies the volume of oil from the oil pump (75) to the differential device (13);
a first switching valve (84) that switches a supply passage of the volume of oil from the oil pump (75) to the actuating oil passage (82) or the lubricating oil passage (83);
a first solenoid valve (86) that controls the operation of the first switching valve (84);
and a control portion that controls the operation of the first solenoid valve (86).

11. The vehicle drive device (1) of claim 10, further comprising:
a second switching valve (85) that switches the supply passage of the volume of oil from the oil pump (75) in accordance with the engagement-disengagement state of the engager (37); and
a second solenoid valve (87) that controls the operation of the second switching valve (85),
wherein the control portion controls the operation of the first solenoid valve (86) and the second solenoid valve (87).

12. The vehicle drive device (1) according to any of the preceding claims, wherein:
the control portion activates both the first solenoid valve (86) and the second solenoid valve (87) when switching the engager (37) from the disengaged state to the engaged state; and the control portion activates only the first solenoid valve (86) when switching the engager (37) from the engaged state to the disengaged state.

13. The vehicle drive device (1) of claim 12, wherein the control portion, after switching the engager (37) from the disengaged state to the engaged state, first stops the first solenoid valve (86) and next stops the second solenoid valve (87).

14. The vehicle drive device (1) according to any of the preceding claims, further comprising:
a housing (11) that houses the electric motor (2), the speed reducer (12) and the differential device (13) and to which the volume of oil is recovered; and
an oil reservoir (280) that is partitioned from the housing (11) and that temporarily stores the volume of oil during forward driving of the electric motor (2).

15. The vehicle drive device (1) of claim 14, wherein a lubricating oil passage (83) supplies the volume of oil to the speed reducer (12) in addition to the differential device (13) for lubrication, and supplies the volume of oil to the oil reservoir (280) for temporary storage.

16. The vehicle drive device (1) of claim 14, wherein the oil reservoir (280) supplies the volume of oil to the housing (11) in the case of the stored quantity of the volume of oil in the oil reservoir (280) being equal to or greater than a predetermined quantity.

## Patentansprüche

1. Fahrzeugantriebsvorrichtung (1), die aufweist:
einen Elektromotor (2), der Räder eines Fahrzeugs antreibt;
einen Drehzahlminderer (12), der eine Antriebsdrehzahl des Elektromotors (2) verringert;
eine Differentialvorrichtung (13), die eine Ausgabe des Drehzahlminderers (12) an ein linkes Rad und ein rechtes Rad des Fahrzeugs verteilt; und
eine Eingreifeinrichtung (37), die entweder zwischen dem linken Rad oder dem rechten Rad des Fahrzeugs und der Differentialvorrichtung (13) bereitgestellt ist, und einen Eingriff und ein Lösen einer Antriebskraft dazwischen durchführt.

2. Fahrzeugantriebsvorrichtung (1) gemäß Anspruch 1, die ferner aufweist:
eine Radachse (10B), die entweder das linke Rad oder das rechte Rad des Fahrzeugs und die Differentialvorrichtung (13) verbindet, wobei der Elektromotor (2) um die Radachse (10B) herum angeordnet ist.

3. Fahrzeugantriebsvorrichtung (1) gemäß einem der vorhergehenden Ansprüche, die ferner aufweist:
eine Radachse (10B), die entweder das linke Rad oder das rechte Rad des Fahrzeugs und die Differentialvorrichtung (13) verbindet,
wobei:
der Drehzahlminderer (12) ein Planetengetriebe-Drehzahlminderer (12) ist, der um die Radachse (10B) herum angeordnet ist; und
der Planetengetriebe-Drehzahlminderer (12) ein Hohlrad (24) hat, das mit der Innenseite eines das auf einer Fahrzeugkarosserie befestigten Gehäuses (11) verbunden ist.

4. Fahrzeugantriebsvorrichtung (1) gemäß einem der vorhergehenden Ansprüche, wobei:
der Planetengetriebe-Drehzahlminderer (12) ein Sonnenrad (21), ein erstes Zahnrad, das mit dem Sonnenrad (21) in Eingriff ist, ein zweites Zahnrad (27),
das seitlich von einer Axialrichtung des ersten Zahnrads (26) integral bereitgestellt ist und einen kleineren Durchmesser als das erste Zahnrad (26) hat, aufweist; und
das Hohlrad (24) in Eingriff im einer Umfangsseite des zweiten Zahnrads (27) ist.

5. Fahrzeugantriebsvorrichtung (1) gemäß einem der Ansprüche 1 bis 4, die ferner aufweist:
eine Ölpumpe (75), die zwischen dem Elektromotor (2) und der Eingreifeinrichtung (37) angeordnet ist, und die, indem sie durch den Elektromotor angetrieben wird, eine Hydraulikflüssigkeit an die Eingreifeinrichtung (37) zuführt, wobei die Eingreifeinrichtung (37) eine hydraulische Eingreifeinrichtung (37) hat, die den Eingriff und das Lösen der Antriebskraft durch einen Hydraulikdruck durchführt.

6. Fahrzeugantriebsvorrichtung (1) gemäß einem der Ansprüche 1 bis 5, wobei die Eingreifeinrichtung (37) eine Zahnradeingreifeinrichtung (37) ist.

7. Fahrzeugantriebsvorrichtung (1) von Anspruch 6, wobei die Zahnradeingreifeinrichtung (37) zwischen dem Eingriff und dem Lösen umschaltet, indem einen Hydraulikdruck an einen Kolben (50) anlegt wird, der koaxial mit einer Radachse (10B) angeordnet ist.

8. Fahrzeugantriebsvorrichtung (1) gemäß einem der vorhergehenden Ansprüche, die ferner aufweist:
einen Zustandserkennungsschalter (68, 69), der den Eingreif-Lösezustand der Zahnradeingreifeinrichtung (37) erkennt, indem der Kolben (50) während einer Sollverschiebung des Kolbens (50) anliegt, wobei
der Zustandserkennungsschalter (68) schräg geneigt zu einer Umfangswand eines auf einer Fahrzeugkarosserie befestigten Gehäuses (11) installiert ist.

9. Fahrzeugantriebsvorrichtung (1) gemäß einem der Ansprüche 1 bis 8, wobei die Eingreifeinrichtung (37) in einen Eingreifzustand eintritt, wenn der Elektromotor (2) in einem Betriebszustand ist, und in einen gelösten Zustand eintritt, wenn der Elektromotor (2) in einem Nichtbetriebszustand ist.

10. Fahrzeugantriebsvorrichtung (1) gemäß einem der vorhergehenden Ansprüche, die ferner aufweist:
eine Ölpumpe (75), die von dem Elektromotor (2) angetrieben wird;
einen Schalt-Ölkanal (82), der ein Ölvolumen von der Ölpumpe (75) an die Eingreifeinrichtung (37) zuführt;
einen Schmierölkanal (83), der das Ölvolumen von der Ölpumpe (75) an die Differentialvorrichtung (13) zuführt;
ein erstes Schaltventil (84), das einen Zuführungskanal für das Ölvolumen von der Ölpumpe (75) zu dem Schalt-Ölkanal (82) oder dem Schmierölkanal (83) schaltet;
ein erstes Magnetventil (86), das den Betrieb des ersten Schaltventils (84) steuert;
und einen Steuerabschnitt, der den Betrieb des ersten Magnetventils (86) steuert.

11. Fahrzeugantriebsvorrichtung (1) gemäß Anspruch 10, die ferner aufweist:
ein zweites Schaltventil (85), das den Zuführungskanal für das Ölvolumen von der Ölpumpe (75) gemäß dem Eingreif-/Lösezustand der Eingreifeinrichtung (37) schaltet; und
ein zweites Magnetventil (87), das den Betrieb des zweiten Schaltventils (85) steuert;
wobei der Steuerabschnitt den Betrieb des ersten Magnetventils (86) und des zweiten Magnetventils (87) steuert.

12. Fahrzeugantriebsvorrichtung (1) gemäß einem der vorhergehenden Ansprüche, wobei der Steuerabschnitt sowohl das erste Magnetventil (86) als auch das zweite Magnetventil (87) betätigt, wenn die Eingreifeinrichtung (37) von dem gelösten Zustand in den Eingreifzustand geschaltet wird; und der Steuerabschnitt nur das erste Magnetventil (86) betätigt, wenn die Eingreifeinrichtung (37) von dem Eingreifzustand in den gelösten Zustand geschaltet wird.

13. Fahrzeugantriebsvorrichtung (1) gemäß Anspruch 12, wobei der Steuerabschnitt nach dem Umschalten der Eingreifeinrichtung (37) von dem gelösten Zustand in den Eingreifzustand zuerst das erste Magnetventil (86) ausschaltet und dann das zweite Magnetventil (87) ausschaltet.

14. Fahrzeugantriebsvornchtung (1) gemäß einem der vorhergehenden Ansprüche, die ferner aufweist:
ein Gehäuse (11), das den Elektromotor (2), den Drehzahlminderer (12) und die Differentialvorrichtung (13) aufnimmt und in dem das Ölvolumen zurückgewonnen wird; und
einen Ölsammelbehälter (280), der von dem Gehäuse (11) abgeteilt ist und der das Ölvolumen während des Vorwärtsantriebs des Elektromotors (2) vorübergehend lagert.

15. Fahrzeugantriebsvorrichtung (1) gemäß Anspruch 14, wobei ein Schmierölkanal (83) das Ölvolumen zusätzlich zu der Differentialvorrichtung (13) an den Drehzahlminderer (12) zur Schmierung zuführt und das Ölvolumen an den Ölsammelbehälter (280) zur vorübergehenden Lagerung zuführt.

16. Fahrzeugantriebsvorrichtung (1) gemäß Anspruch 14, wobei der Ölsammelbehälter (280) das Ölvolumen in dem Fall, dass die gelagerte Menge des Ölvolumens in dem Ölsammelbehälter (280) gleich oder größer einer vorgegebenen Menge ist, an das Gehäuse (11) zuführt.

## Revendications

1. Dispositif d'entraînement de véhicule (1) comprenant :
un moteur électrique (2) qui entraîne les roues d'un véhicule ;
un réducteur de vitesse (12) qui réduit une vitesse de rotation d'entraînement du moteur électrique (2) ;
un dispositif différentiel (13) qui distribue une sortie du réducteur de vitesse (12) à une roue gauche et une roue droite du véhicule ; et
un enclencheur (37) qui est disposé entre l'une de la roue gauche et de la roue droite du véhicule et le dispositif différentiel (13), et réalise entre eux un enclenchement et un désenclenchement d'une puissance d'entraînement.

2. Dispositif d'entraînement de véhicule (1) selon la revendication 1, comprenant en outre :
un essieu de roue (10B) qui raccorde l'une de la roue gauche ou de la roue droite du véhicule et le dispositif différentiel (13), dans lequel le moteur électrique (2) est disposé autour de l'essieu de roue (10B).

3. Dispositif d'entraînement de véhicule (1) selon l'une quelconque des revendications précédentes, comprenant en outre :
un essieu de roue (10B) qui raccorde l'une de la roue gauche ou de la roue droite du véhicule et le dispositif différentiel (13),
dans lequel :
le réducteur de vitesse (12) est un réducteur de vitesse de type engrenage planétaire (12) qui est disposé autour de l'essieu de roue (10B) ; et
le réducteur de vitesse de type engrenage planétaire (12) comporte une couronne d'engrenage (24) qui est raccordée au côté interne d'un logement (11) fixé sur une carrosserie de véhicule.

4. Dispositif d'entraînement de véhicule (1) selon l'une quelconque des revendications précédentes, dans lequel :
le réducteur de vitesse de type engrenage planétaire (12) comporte un planétaire (21), un premier engrenage (26) qui est enclenché avec le planétaire (21), et un second engrenage (27) qui est solidairement prévu latéralement vers une direction axiale du premier engrenage (26) et a un plus petit diamètre que le premier engrenage (26) ; et
la couronne d'engrenage (24) est enclenchée avec un côté circonférentiel du second engrenage (27).

5. Dispositif d'entraînement de véhicule (1) selon l'une quelconque des revendications 1 à 4, comprenant en outre :
une pompe à huile (75) qui est disposée entre le moteur électrique (2) et l'enclencheur (37) et, en étant entraînée par le moteur électrique (2), fournit un fluide hydraulique à l'enclencheur (37), où l'enclencheur (37) comporte un enclencheur hydraulique (37) qui réalise l'enclenchement et le désenclenchement de la puissance d'entraînement par une pression hydraulique.

6. Dispositif d'entraînement de véhicule (1) selon l'une quelconque des revendications 1 à 5, dans lequel l'enclencheur (37) est un enclencheur de type engrenage (37).

7. Dispositif d'entraînement de véhicule (1) selon la revendication 6, dans lequel
l'enclencheur de type engrenage (37) permute entre l'enclenchement et le désenclenchement en appliquant une pression hydraulique à un piston (50) qui est agencé coaxialement avec un essieu de roue (10B).

8. Dispositif d'entraînement de véhicule (1) selon l'une quelconque des revendications précédentes, comprenant en outre :
un commutateur de détection d'état (68, 69) qui détecte l'état d'enclenchement-désenclenchement de l'enclencheur de type engrenage (37) en mettant le piston (50) en butée pendant un déplacement défini du piston (50), dans lequel
le commutateur de détection d'état (68) est installé incliné à l'oblique par rapport à une paroi périphérique d'un logement (11) fixé sur une carrosserie de véhicule.

9. Dispositif d'entraînement de véhicule (1) selon l'une quelconque des revendications 1 à 8, dans lequel l'enclencheur (37) entre dans un état enclenché lorsque le moteur électrique (2) est dans un état de fonctionnement, et entre dans un état désenclenché lorsque le moteur électrique (2) est dans un état de non fonctionnement.

10. Dispositif d'entraînement de véhicule (1) selon l'une quelconque des revendications précédentes, comprenant en outre :
une pompe à huile (75) qui est entraînée par le moteur électrique (2) ;
un passage d'huile d'actionnement (82) qui fournit un volume d'huile de la pompe à huile (75) à l'enclencheur (37) ;
un passage d'huile de lubrification (83) qui fournit le volume d'huile de la pompe à huile (75) au dispositif différentiel (13) ;
une première soupape de commutation (84) qui permute un passage d'alimentation du volume d'huile de la pompe à huile (75) au passage d'huile d'actionnement (82) ou au passage d'huile de lubrification (83) ;
une première électrovanne (86) qui commande le fonctionnement de la première soupape de commutation (84) ;
et une partie de commande qui commande le fonctionnement de la première électrovanne (86).

11. Dispositif d'entraînement de véhicule (1) selon la revendication 10, comprenant en outre :
une seconde soupape de commutation (85) qui permute le passage d'alimentation du volume d'huile de la pompe à huile (75) en conformité avec l'état d'enclenchement-désenclenchement de l'enclencheur (37) ; et
une seconde électrovanne (87) qui commande le fonctionnement de la seconde soupape de commutation (85),
dans lequel la partie de commande commande le fonctionnement de la première électrovanne (86) et de la seconde électrovanne (87).

12. Dispositif d'entraînement de véhicule (1) selon l'une quelconque des revendications précédentes, dans lequel :
la partie de commande active à la fois la première électrovanne (86) et la seconde électrovanne (87) lors de la permutation de l'enclencheur (37) de l'état désenclenché à l'état enclenché ; et la partie de commande n'active que la première électrovanne (86) lors de la permutation de l'enclencheur (37) de l'état enclenché à l'état désenclenché (13).

13. Dispositif d'entraînement de véhicule (1) selon la revendication 12, dans lequel la partie de commande, après permutation de l'enclencheur (37) de l'état désenclenché à l'état enclenché, arrête en premier lieu la première électrovanne (86) et arrête ensuite la seconde électrovanne (87).

14. Dispositif d'entraînement de véhicule (1) selon l'une quelconque des revendications précédentes, comprenant en outre :
un logement (11) qui loge le moteur électrique (2), le réducteur de vitesse (12) et le dispositif différentiel (13) et dans lequel le volume d'huile est récupéré ; et
un réservoir d'huile (280) qui est séparé du logement (11) et qui stocke temporairement le volume d'huile pendant une marche avant du moteur électrique.

15. Dispositif d'entraînement de véhicule (1) selon la revendication 14, dans lequel un passage d'huile de lubrification (83) fournit le volume d'huile au réducteur de vitesse (12) en plus du dispositif différentiel (13) pour lubrification, et fournit le volume d'huile au réservoir d'huile (280) pour un stockage temporaire.

16. Dispositif d'entraînement de véhicule (1) selon la revendication 14, dans lequel le réservoir d'huile (280) fournit le volume d'huile au logement (11) dans le cas où la quantité stockée du volume d'huile dans le réservoir d'huile (280) est supérieure ou égale à une quantité prédéterminée.
